(19) 

Europäisches Patentamt

European Patent Office

Office européen des brevets

(11) **EP 4 668 172 A1**

(12) **EUROPEAN PATENT APPLICATION**
published in accordance with Art. 153(4) EPC

(43) Date of publication:
**24.12.2025 Bulletin 2025/52**

(21) Application number: **23922593.1**

(22) Date of filing: **13.02.2023**

(51) International Patent Classification (IPC):
$G06N\ 10/60^{(2022.01)}$    $G06N\ 99/00^{(2019.01)}$

(52) Cooperative Patent Classification (CPC):
**G06N 10/60; G06N 99/00**

(86) International application number:
**PCT/JP2023/004773**

(87) International publication number:
**WO 2024/171252 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NEC Corporation**
**108-8001 Tokyo (JP)**

(72) Inventor: **MIYAZAKI Ryoji**
**Tokyo 108-8001 (JP)**

(74) Representative: **Betten & Resch**
**Patent- und Rechtsanwälte PartGmbB**
**Maximiliansplatz 14**
**80333 München (DE)**

(54) **ASSIGNMENT DEVICE AND ASSIGNMENT METHOD**

(57) The allocation device 800 includes allocation means 801 which allocates binary variables of an Ising problem, which represents a cost function of an LHZ method, to nodes on a Zephyr graph according to the number of the binary variables and parameters for determining allocation of the binary variables, and output means 802 which outputs information indicating correspondence between the binary variables and the nodes, based on a result of the allocation of the binary variables to the nodes, wherein the allocation means 801 reflects a periodic structure that represents the relationship between pairs of the binary variables that are products in the cost function of the Ising problem to a periodic structure in the nodes and edges on the Zephyr graph, to allocate the binary variables to the nodes.

FIG. 25

ALLOCATION DEVICE   800

ALLOCATION MEANS   801

OUTPUT MEANS   802

## Description

## Technical Field

The present invention relates to an allocation device and an allocation method in quantum annealing.

## Background Art

One method for solving combinatorial optimization problems is quantum annealing. In quantum annealing, a cost function is defined. Then, the state that minimizes the value of the cost function is made to correspond to the solution of the combinatorial optimization problem.

The cost function used here is a function of variables called Ising variables or Ising spins. In the following, discussion will be made using Ising variables. An Ising variable is a variable that can take only the values 1 and -1. A cost function is expressed by many Ising variables. The Ising variables are made to correspond to variables of the combinatorial optimization problem. Any combination of values of the variables in the combinatorial optimization problem is represented by a combination of values of the Ising variables in the cost function. In particular, a smaller value of the cost function indicates a better combination in the combinatorial optimization problem. Therefore, among combinations of Ising variables, the one that gives the smallest value of the cost function represents the optimal combination in the combinatorial optimization problem, that is, the optimal solution.

A combinatorial optimization problem expressed as a problem of minimizing a cost function of Ising variables in this way is called an Ising problem. In the following, discussion is made with the aim of solving this Ising problem.

In quantum annealing, a combination of Ising variables that minimizes the defined cost function is searched for. At that time, an Ising variable in the cost function is represented by a quantum bit. In the method called quantum annealing, a quantum bit is merely a variable. However, the concept originates from physical entities, and a quantum bit can take two states. These two states are made to correspond to 1 and -1 of the Ising variable. A hardware that implements this method is called a quantum annealing machine.

The energy of a system consisting of multiple quantum bits can be defined. For example, quantum annealing is a method of finding a combination of quantum bit states that minimizes the energy. Quantum annealing can be used for solving the Ising problem. That is, in the quantum annealing machine, the two states of quantum bits are made to correspond to the Ising variable, and an energy of the entire quantum bits is made to correspond to the cost function of the Ising problem. Thus, obtaining a low energy state of the entire quantum bits by quantum annealing corresponds to finding a combination of variables that minimizes the value of the cost function of the Ising problem.

There is a method called the LHZ (Lechner-Hauke-Zoller) method (Patent literature 1) for expressing the cost function corresponding to the Ising problem. Performing quantum annealing on the cost function handled in the LHZ method will be referred to as quantum annealing of the LHZ method. In order to perform quantum annealing of the LHZ method on a quantum annealing machine, it is necessary to make four quantum bits directly interact (four-body interaction) in the quantum annealing machine.

Currently, the only quantum annealing machine that is commercially available is the one developed by D-wave Quantum Inc. (hereinafter referred to as D-wave (registered trademark)). However, the hardware in D-Wave can only handle interactions between two quantum bits (two-body interactions). That is, D-Wave cannot directly handle four-body interactions, and cannot directly handle quantum annealing of the LHZ method.

However, there is a possibility that quantum annealing of the LHZ method can be effectively achieved on D-Wave. Four-body interactions can be transformed into multiple two-body interactions, making it possible to handle quantum annealing of the LHZ method on D-Wave. The quantum bit states that minimize the energy of the entire system are the same before and after the transformation. Therefore, D-Wave can effectively achieve quantum annealing aimed at searching for low energy states.

Not limited to the LHZ method, when quantum annealing is performed using D-Wave, a product of Ising variables appearing in the cost function is made to correspond to interaction between quantum bits. The quantum bit interaction network in D-Wave has structures called Chimera graph, Pegasus graph, and Zephyr graph, which are composed of nodes and edges. In this specification, focus is placed on the Zephyr graph. In order to solve the Ising problem by quantum annealing using D-Wave, variables of the cost function are appropriately allocated to the nodes on the Zephyr graph. One example of a method for finding such appropriate allocation is described in Non patent literature 1 and Non patent literature 2.

## Citation List

**Patent Literature**

PTL 1: Japanese Patent No. 6656273

**Non Patent Literature**

NPL 1: K. Boothby, et al., "Zephyr Topology of D-Wave Quantum Processors", [online], D-wave Systems inc., [Accessed on October 26, 2022] Internet <URL:https://www.dwavesys.com/media/fawfas04/14-1056a-a_zephyr_topology_of_d-wave_quantum_processors.pdf>
NPL 2: J. Cai, et al., "A practical heuristic for finding graph minors", arXiv:1406.2741 (2014).
NPL 3: A. Rocchetto, et al., "Stabilizers as a design tool for new forms of the Lechner-Hauke-Zoller annealer", Science Advances 2, e1601246 (2016).

**Summary of Invention**

**Technical Problem**

The method described in Non patent literature 1 is applicable to any Ising problem. However, because the method in Non patent literature 1 is not an allocation method specialized for the cost function used in quantum annealing of the LHZ method, it employs a generic allocation that is used for every Ising problem. That is, the same allocation is performed for all Ising problems. Consequently, for each Ising problem there may exist an allocation that can reduce the number of nodes used on the Zephyr graph. The method described in Non patent literature 2 is a heuristic method. In the method described in Non patent literature 2, an allocation can be found, but there is no guarantee that the same allocation will be obtained at every execution. In particular, the method in Non patent literature 2 does not guarantee a reduction in the number of nodes used. In addition, in the method described in Non patent literature 2 a bias can occur in the number of nodes to which each variable is allocated. Therefore, with these two methods, when an Ising problem is expressed and solved on a Zephyr graph, there is the problem that an allocation that uses a small number of nodes with little bias cannot be found, or there is no guarantee that such an allocation can be found.

One of the purposes of the present invention is to solve such a problem, and to obtain, as a correspondence between variables of the Ising problem handled in quantum annealing in the LHZ method and nodes of the graph for solving the Ising problem, a correspondence in which the number of nodes to which each variable is assigned is less biased and fewer nodes are used.

**Solution to Problem**

The allocation device according to the present invention includes allocation means for allocating binary variables of an Ising problem, which represents a cost function of an LHZ method, to nodes on a Zephyr graph according to the number of the binary variables and parameters for determining allocation of the binary variables, and output means for outputting information indicating correspondence between the binary variables and the nodes, based on a result of the allocation of the binary variables to the nodes, wherein the allocation means reflects a periodic structure that represents the relationship between pairs of the binary variables that are products in the cost function of the Ising problem to a periodic structure in the nodes and edges on the Zephyr graph, avoids part of defective nodes among the nodes, reflects a size of the Zephyr graph, to allocate the binary variables to the nodes.

The allocation method according to the present invention includes allocating binary variables of an Ising problem, which represents a cost function of an LHZ method, to nodes on a Zephyr graph according to the number of the binary variables and parameters for determining allocation of the binary variables, outputting information indicating correspondence between the binary variables and the nodes, based on a result of the allocation of the binary variables to the nodes, and reflecting a periodic structure that represents the relationship between pairs of the binary variables that are products in the cost function of the Ising problem to a periodic structure in the nodes and edges on the Zephyr graph, to allocate the binary variables to the nodes.

The allocation recording medium according to the present invention stores the allocation program causes a computer to execute a process of allocating binary variables of an Ising problem, which represents a cost function of an LHZ method, to nodes on a Zephyr graph according to the number of the binary variables and parameters for determining allocation of the binary variables, and a process of outputting information indicating correspondence between the binary variables and the nodes, based on a result of the allocation of the binary variables to the nodes, wherein, in the allocation process, the allocation program causes the computer to execute reflecting a periodic structure that represents the relationship between pairs of the binary variables that are products in the cost function of the Ising problem to a periodic structure in the nodes and edges on the Zephyr graph, to allocate the binary variables to the nodes.

**Advantageous Effects of Invention**

According to the present invention, when the quantum annealing of the LHZ method where the quantum bit coupling structure is a Zephyr graph is performed, it is possible to perform unbiased variable allocation with fewer quantum bits.

**Brief Description of Drawings**

[FIG. 1] It is an explanatory diagram showing a four-body interaction of a cost function using the LHZ method.

[FIG. 2] It is an explanatory diagram showing an example of a Zephyr graph.

[FIG. 3] It is an explanatory diagram showing an example of a Zephyr graph.

[FIG. 4] It is an explanatory diagram showing an example of a Zephyr graph.

[FIG. 5] It is an explanatory diagram showing an example of a Zephyr graph.

[FIG. 6] It is an explanatory diagram showing an example of a Zephyr graph.

[FIG. 7] It is an explanatory diagram showing an example of a Zephyr graph.

[FIG. 8] It is an explanatory diagram showing an example of a chain.

[FIG. 9] It is an explanatory diagram showing the product structure among variables in the cost function.

[FIG. 10] It is an explanatory diagram showing part of the product structure among variables in the cost function.

[FIG. 11] It is an explanatory diagram showing part of the product structure among variables in the cost function.

[FIG. 12] It is an explanatory diagram showing part of the product structure among variables in the cost function and a plaquette row.

[FIG. 13] It is an explanatory diagram showing a unit row in the Zephyr graph.

[FIG. 14] It is an explanatory diagram showing a chain.

[FIG. 15] It is an explanatory diagram showing an example of a computing system.

[FIG. 16] It is a block diagram showing an example of a configuration of an allocation device.

[FIG. 17] It is a block diagram showing an example of a hardware configuration of an allocation device.

[FIG. 18] It is an explanatory diagram of a change of allocation for avoiding defective bits.

[FIG. 19] It is an explanatory diagram showing an example of an allocation.

[FIG. 20] It is an explanatory diagram of allocation to adjacent unit rows.

[FIG. 21] It is a flowchart showing an operation flow of the allocation device.

[FIG. 22] It is a flowchart showing an operation flow of computing the Ising problem by the computing system.

[FIG. 23] It is an explanatory diagram for explaining the effect of the present example embodiment.

[FIG. 24] It is an explanatory diagram for explaining the effect of the present example embodiment.

[FIG. 25] It is a block diagram showing a main part of the allocation device.

**Example Embodiment**

To assist understanding of the example embodiment, first explain the Ising problem, quantum annealing of the LHZ method, the Zephyr graph, representing an Ising problem on a Zephyr graph, and the quantum annealing machine that is related thereto.

An Ising problem is generally expressed as follows. First, prepare, for example, N (N is a natural number) binary variables that can take the values of 1 and -1. Denote them by $s_i$, where i can take the values 1, 2, ... , N and distinguishes $s_i$ according to the value of i. A cost function H is defined, for example, as Equation (1) below.

[Math. 1]

$$H = \sum_{i,j=1}^{5} s_i s_j \qquad \text{Equation (1)}$$

In Equation (1) the $J_{ij}$ on the right-hand side is the value at the i-th row and the j-th column of a matrix J, where both i and j can take the values 1, 2, ... , N-1. The $h_i$ on the right-hand side of Equation (1) is the value in the i-th column of a vector h, where i can take the values 1, 2, ... , N-1. $J_{ij}$ and $h_i$ can take real values. Equation (1) is a general representation of a first- and second-order real-coefficient polynomial composed of N-1 variables $s_i$, each of which can take only the value 1 or -1. Further, assume $s_N = 1$ and $J_{iN} = h_i$, and that i and j can also take the value N, then Equation (1) is expressed by Equation (2).

[Math. 2]

$$H = \sum_{i,j=1}^{N} J_{ij} s_i s_j \qquad \text{Equation (2)}$$

When $s_N$ can take the values 1 and -1, Equation (1) is included in Equation (2) as a special case. In the following, the cost function is considered in the form of Equation (2). In addition, it is sufficient as a general representation to assume that all values of $J_{ij}$ with i > j are zero. Therefore, in the following, all values of $J_{ij}$ with i ≥ j are assumed to be zero and only $J_{ij}$ with i < j are considered. The Ising problem is the problem of finding a combination of the values of $s_i$ (i = 1, 2, ... , N) that minimizes the cost function H of Equation (2) when the matrix J is concretely given.

As explained above, one method for solving an Ising problem is quantum annealing. One scheme of quantum annealing is the LHZ method. Quantum annealing of the LHZ method solves an Ising problem whose cost function is expressed by Equation (2) by minimizing the cost function $H_{LHZ}$ shown below.

[Math. 3]

$$H_{LHZ} = \sum_{i<j} J_{ij} \sigma_{ij} - C \sum_{<i,j,k,l>} \sigma_{ik} \sigma_{il} \sigma_{jk} \sigma_{jl} \qquad \text{Equation (3)}$$

In Equation (3) $J_{ij}$ is the same as $J_{ij}$ in Equation (2). ($\sigma_{ij}$ is a binary variable that can take the values 1 and -1, similar to $s_i$. In Equation (3) the letter $\sigma$ is used to distinguish it from $s_i$. The indices i and j of $J_{ij}$ take the same ranges as those of Equation (2). However, the indices i and j of ($\sigma_{ij}$ also include the case i = j in addition to the range of $J_{ij}$. Nevertheless, ($\sigma_{ii}$ is introduced for simplicity of representation, is always equal to 1, and is a constant rather than a variable. C is a parameter to be adjusted in a positive value range.

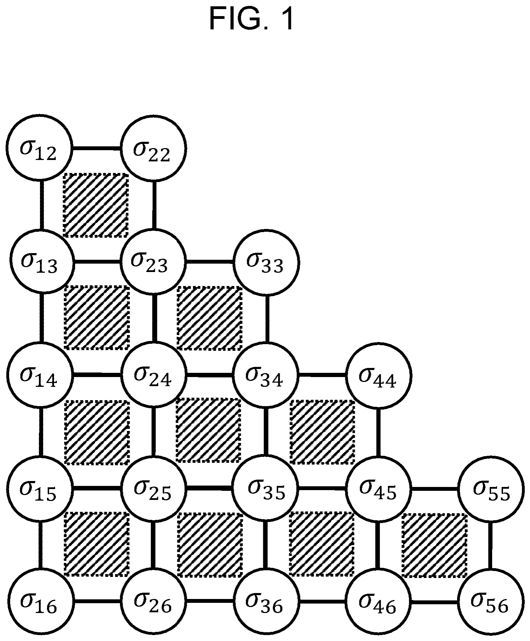

FIG. 1 is an explanatory diagram showing a four-body interaction of a cost function using the LHZ method. The range of the sum over the products of four $\sigma$ variables ($\sigma_{ik} \sigma_{il} \sigma_{jk} \sigma_{jl}$) can be understood from FIG. 1. In FIG. 1, the variables $\sigma_{ij}$ of Equation (3) are represented as variables on lattice points. The sum of the products of four $\sigma$ variables ($\sigma_{ik} \sigma_{il} \sigma_{jk} \sigma_{jl}$) is the sum of the products of $\sigma$ variables written at the four vertices of a square indicated by hatching in FIG. 1. One example of the product of four $\sigma$ variables is $\sigma_{13} \sigma_{14} \sigma_{23} \sigma_{24}$.

Because the value of $\sigma$ is 1 or -1, the product of four $\sigma$ variables ($\sigma_{ik} \sigma_{il} \sigma_{jk} \sigma_{jl}$) is also 1 or -1. When C is a large positive value, in the combination of values of $\sigma_{ij}$ (i = 1, 2, ... , N, j = i + 1, i + 2, ... , N) that minimizes $H_{LHZ}$, the product of four $\sigma$ variables ($\sigma_{ik} \sigma_{il} \sigma_{jk} \sigma_{jl}$) in the second sum on the right-hand side of Equation (3) (hereinafter referred to as the second sum) becomes 1. There are multiple combinations of values of $\sigma_{ij}$ (i = 1, 2, ... , N, j = i + 1, i + 2, ... , N) in which the products of four $\sigma$ variables in the second sum are all 1, and the value of the second sum is the same for those combinations. Among them, the combination that minimizes $H_{LHZ}$ is the one that minimizes $\Sigma_{i<j} J_{ij} \sigma_{ij}$. Moreover, when the products of four $\sigma$ variables in the second sum are all 1, it is possible to set $\sigma_{ij} = s_i s_j$. Here $s_i$ is, similar to $s_i$ in Equation (2), a binary variable that can take the values 1 and -1. Indeed, when $\sigma_{ij} = s_i s_j$, $\sigma_{ik} \sigma_{il} \sigma_{kj} \sigma_{lj} = s_i s_k s_i s_l s_k s_j s_l s_j = 1$. As mentioned above $\sigma_{ii}$ is set to 1, but this satisfies $\sigma_{ii} = s_i s_i = 1$. Therefore, the combination of values of $\sigma_{ij}$ ($i = 1, 2, ... , N$, $j = i + 1, i + 2, ... , N$) that minimizes $H_{LHZ}$ when C is large gives $s_i$ ($i = 1, 2, ... , N$) that minimizes $\Sigma_{i<j} J_{ij} s_i s_j$. That is, the $s_i$ obtained here minimizes the cost function H of Equation (2) and is the solution of the original Ising problem.

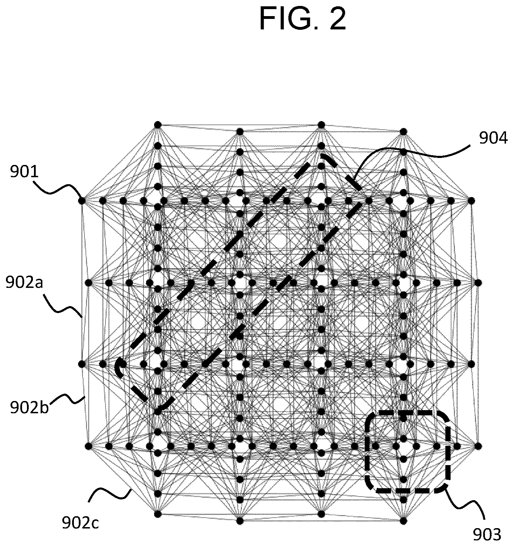

Next, the minimum necessary matters concerning the Zephyr graph will be explained mainly based on Non patent literature 1. FIG. 2 is an explanatory diagram showing an example of a Zephyr graph. A Zephyr graph consists of multiple nodes 901 and edges 902a, 902b, and 902c that connect them. In a Zephyr graph the nodes 901 are arranged periodically. That is, the Zephyr graph can also be said to represent information of a hardware configuration possessed by a quantum annealing machine. The hardware configuration represents, for example, multiple quantum bits and a structure that couples the multiple quantum bits. The periodic arrangement is explained below.

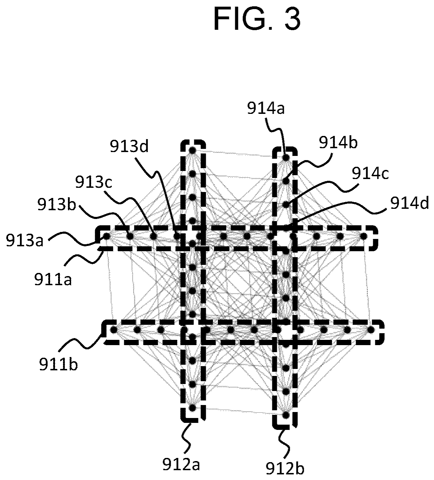

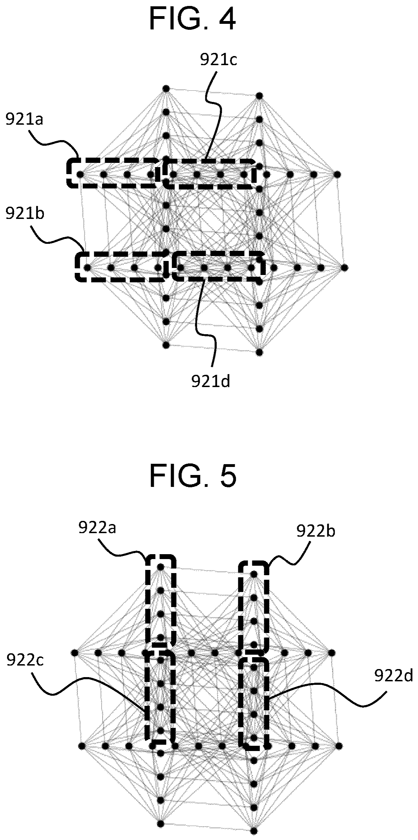

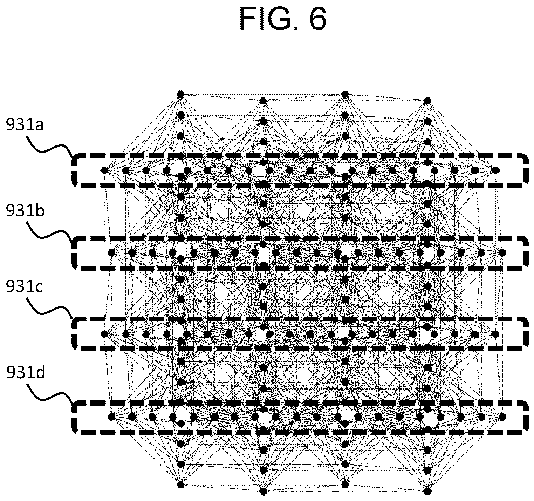

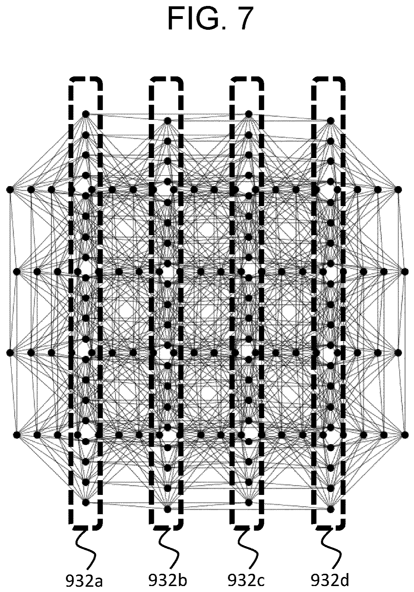

The coordinates of a node in a Zephyr graph are represented by (u, w, k, j, z). They can take values such as u = 0, 1, w = 0, 1, ... , 2m, k = 0, 1, ... , 3, j = 0, 1, z = 0, 1, ... , m - 1. The parameter m represents the overall size of the Zephyr graph. For example, in the Zephyr graph shown in FIG. 2, m is 2. The coordinates u, w, k, and z have the following meanings. u represents a direction in which the nodes align. Nodes with u = 0 align horizontally, and nodes with u = 1 align vertically. As shown in FIG. 3, the value of u for the group of nodes 911a and 911b that align horizontally is 0. The value of u for the group of nodes 912a and 912b that align vertically is 1. Hereinafter, the direction of u means the horizontal direction for nodes with u = 0 and the vertical direction for nodes with u = 1. Nodes with the same u are grouped by fours that are adjacent in the direction of u. In the example shown in FIG. 3, these correspond to the four nodes 913a, 913b, 913c, 913d and the four nodes 914a, 914b, 914c, 914d. These are called tiles. w represents the coordinate of the tile in the direction of u. For nodes with u = 0, w indicates the position of the tile to which the node belongs, counted from the left end. In the example shown in FIG. 4, the node groups 921a and 921b have w = 0 and the node groups 921c and 921d have w = 1. For nodes with u = 1, w indicates the position of the tile to which the node belongs, counted from the upper end. In the example shown in FIG. 5, the node groups 922a and 922b have w = 0 and the node groups 922c and 922d have w = 1. k is the coordinate in the direction of u within a tile. In the example shown in FIG. 3, the nodes 913a and 914a have k = 0. The nodes 913b and 914b have k = 1. The nodes 913c and 914c have k = 2. The nodes 913d and 914d have k = 3. j is one of the tile coordinates in the direction perpendicular to u. In the examples shown in FIG. 4 and FIG. 5, the node groups 921a, 921c, 922a, and 922c have j = 0. The node groups 921b, 921d, 922b, and 922d have j = 1. z is one of the tile coordinates in the direction perpendicular to u. The tile coordinates perpendicular to u are determined by j and z. In the examples shown in FIG. 6 and FIG. 7, the node groups 931a, 931b, 932a, and 932b have z = 0, and the node groups 931c, 931d, 932c, and 932d have z = 1. With the above, for example, the coordinates of the node 914d in the Zephyr graph with m = 1 shown in FIG. 3 are (u, w, k, j, z) = (1, 0, 3, 1, 0).

Although not described in Non patent literature 1, a unit of the Pegasus graph is defined here. A unit of the Pegasus graph is defined as the eight nodes that have the coordinate relationships (0, w, 2, z' % 2, z' // 2), (0, w, 3, z' % 2, z' // 2), (0, w + 1, 0, z' % 2, z' // 2), (0, w + 1, 1, z' % 2, z' // 2), (1, z', 2, w % 2, w // 2), (1, z', 3, w % 2, w // 2), (1, z' + 1, 0, w % 2, w // 2), (1, z', 1, w % 2, w // 2) with w = 0, 1, ... , 2m - 1 and z' = 0, 1, ... , 2m - 1 in the above coordinate representation. Here x % y denotes the remainder when a natural number x is divided by a natural number y, and x // y denotes the integer part. In FIG. 2, the unit 903 is illustrated. The nodes in a unit can be specified by the u and k values of the coordinates of the nodes. In addition, a unit can be distinguished by the two values w and z'. In the unit 903 in the Zephyr graph with m = 2 shown in FIG. 2, (w, z') = (3, 3). There is no overlap of nodes among different units. The Pegasus graph is constructed by arranging units periodically.

Next, the edges of the Zephyr graph are explained. When there is an edge between two nodes $(u_1, w_1, k_1, j_1, z_1)$ and $(u_2, w_2, k_2, j_2, z_2)$, it is represented as

$$(u_1, w_1, k_1, j_1, z_1) - (u_2, w_2, k_2, j_2, z_2) \qquad \text{Equation (4)}$$

The edges of the Zephyr graph are classified into the following three types.

external:

$$(u, w, k, j, z) - (u, w, k, j, z + 1) \qquad \text{Equation (5)}$$

$$\text{odd: } (u, w, k, 0, z) - (u, w, k, 1, z),$$
$$(u, w, k, 0, z) - (u, w, k, 1, z - 1) \qquad \text{Equation (6)}$$

$$\text{internal: } (0, 2w + 1, k, j, z) - (1, 2z + 1, l, i, w),$$

$$(0, 2w, k, j, z) - (1, 2z + 1, l, i, w - i),$$

$$(0, 2w + 1, k, j, z - j) - (1, 2z, l, i, w),$$

$$(0, 2w, k, j, z - j) - (1, 2z, l, i, w - i) \qquad \text{Equation (7)}$$

Here, $u = 0, 1$, $w = 0, 1, \ldots, 2m$, $k = 0, 1, 2, 3$, $l = 0, 1, 2, 3$, $j = 0, 1$, $i = 0, 1$, $z = 0, 1, \ldots, m - 1$.

In FIG. 2, an example of external is 902a, an example of odd is 902b, and an example of internal is 902c.

Next, representing an Ising problem on a Zephyr graph is explained. Representing an Ising problem on a Zephyr graph corresponds to appropriately allocating the variables of the cost function of the Ising problem to nodes of the Zephyr graph. What constitutes appropriate is explained later. An allocation is expressed by enumerating, for each variable of the Ising problem, namely each variable of the cost function, the nodes to which the variable is allocated. At this time one variable may be allocated to multiple nodes.

The background of allocating the variables of the cost function to nodes of the Zephyr graph is that, by doing so, it becomes possible to solve the Ising problem using a machine that uses the Zephyr graph, for example a quantum annealing machine. A quantum annealing machine does not necessarily have to be used, but in the following, it is assumed that a quantum annealing machine is used when solving an Ising problem.

A quantum annealing machine has quantum bits and couplings between quantum bits. A quantum bit mainly has two states, and whether the quantum bit is in either of the two states can be treated as a binary variable. In addition, in a quantum annealing machine it is possible to define the energy of the entire quantum bits. Quantum annealing is a method for finding a combination of quantum-bit states that minimizes that energy. The quantum annealing machine executes quantum annealing and aims to find a combination of quantum-bit states that minimizes the energy. Finding such a combination can be used to solve an Ising problem as follows. In the quantum annealing machine, the two states of a quantum bit are made to correspond to an Ising variable, and the energy of the entire quantum bits is made to correspond to the cost function of the Ising problem. Consequently, obtaining a low-energy state of the entire quantum bits by a quantum annealing machine corresponds to finding a combination of variables that minimizes the value of the cost function of the corresponding to Ising problem.

To make the energy of the entire quantum bits of a quantum annealing machine correspond to the cost function of an Ising problem, the two states of the quantum bits are made to correspond to variables of the Ising problem, and the coupling between quantum bits is made to correspond to the product of the variables in the cost function. To make the couplings correspond to the product of variables, for example, the coupling strength between the i-th quantum bit and the j-th quantum bit is made equal to $J_{ij}$ of the cost function. When all elements of the matrix J of the cost function are made to correspond to coupling strengths between quantum bits, the energy of the entire quantum bits corresponds to a cost function of the Ising problem. Therefore, to solve an Ising problem using a quantum annealing machine, the matrix J is input to the quantum annealing machine, and the quantum annealing machine adjusts the coupling strengths between quantum bits in such a way as to coincide with $J_{ij}$. However, couplings between quantum bits in a quantum annealing machine do not necessarily exist for all combinations of quantum bits. In fact, in a quantum annealing machine developed by D-Wave Quantum Iinc. the couplings between quantum bits have a structure of a Chimera graph, a Pegasus graph, or a Zephyr graph. In this specification, attention is focused only on the Zephyr graph, and Chimera and Pegasus graphs are not considered. Quantum bits correspond to nodes in the Zephyr graph. Couplings between quantum bits correspond to edges in the Zephyr graph.

As explained above, the variables of an Ising problem, the quantum bits, and the nodes of the Zephyr graph have a correspondence. At the same time, the products of variables of an Ising problem, the couplings between quantum bits, and the edges of the Zephyr graph also have a correspondence. To solve an Ising problem using a quantum annealing machine, the variables of the Ising problem are made to correspond to quantum bits. That is, equivalent to making the variables of the Ising problem correspond to the nodes of the Zephyr graph. At the same time, to make the product of variables of the Ising problem correspond to couplings between quantum bits, the products of variables are made to correspond to edges of the Zephyr graph.

As explained above, when an Ising problem is solved by a quantum annealing machine, the variables of the problem are allocated to nodes of the Zephyr graph. Moreover, that allocation is an allocation in such a way that the products of variables of the Ising problem correspond to edges of the Zephyr graph. Such an allocation is an appropriate allocation. When an appropriate allocation is obtained, it becomes clear for the quantum annealing machine to which couplings between which quantum bits on the Zephyr graph should correspond to the products of variables of the Ising problem. When this allocation and the matrix J of the Ising problem are input to the quantum annealing machine, the quantum annealing machine can make the coupling strengths between quantum bits correspond to the matrix J. As a result, the quantum annealing machine can solve the Ising problem.

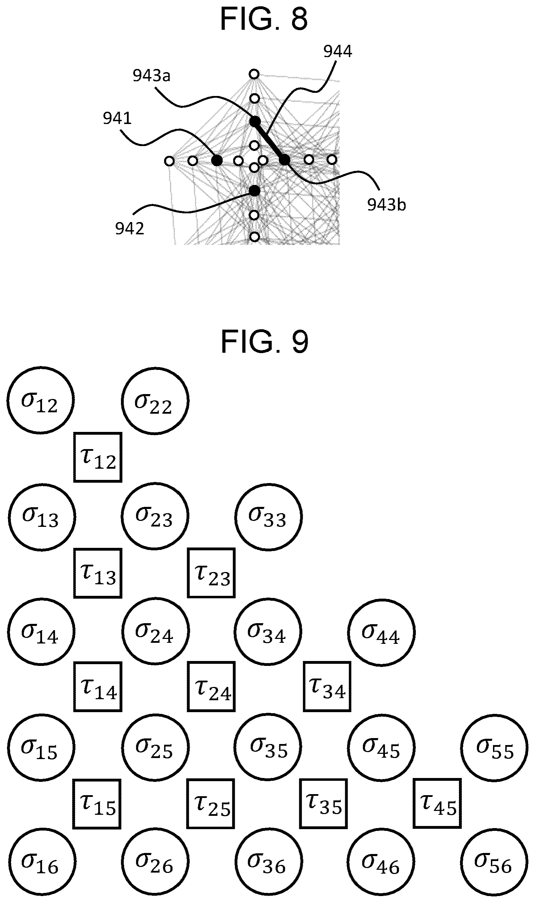

As described above, in general, in order to represent an Ising problem on a Zephyr graph, it is required that variables be properly allocated to nodes. One variable may be allocated to multiple nodes. To explain in detail what allocation is appropriate, a chain is introduced first. A chain is a set of nodes to which the same variable is allocated, namely a sequence of nodes that are connected by edges. Here, variables are determined to be the same when their values, including subscripts, are identical. For example, s and $\sigma$ are different variables. $\sigma$ and $\tau$ are different variables. For example, $s_i$ and $s_j$ are different variables when i and j are different, and the same variable when i and j are the same. However, the number of nodes in a chain may be one or more. In the case where the number of nodes in a chain is more than one, all of the nodes in the chain are connected by edges to at least one other node within the same chain. FIG. 8 is an explanatory diagram illustrating an example of a chain.

The condition for an appropriate allocation is that, for every pair of variables that appear as a product in the cost function of the Ising problem, the two chains of each pair are connected by an edge. The phrase "chains are connected by an edge" means that at least one node in one chain is connected by an edge to at least one node in the other chain. Here, a pair of variables that appear as a product means, in general, the pair of $s_i$ and $s_j$ indicated by i and j for which $J_{ij} \neq 0$ in Equation (1). When $J_{ij} = 0$, the pair of $s_i$ and $s_j$ is interpreted as not appearing as a product in the cost function.

For example, the chains shown in FIG. 8 give an appropriate allocation to the Zephyr graph for the cost function of the Ising problem expressed by Equation (8) below.

[Math. 4]

$$H = \sum_{i,j=1}^{3} s_i s_j \qquad \text{Equation (8)}$$

The nodes 941 and 942 shown in FIG. 8 each represent a chain consisting of a single node. The nodes 943a and 943b constitute a chain of two nodes connected by the edge 944. In Equation (8) there are three variables of the Ising problem, and any pair of two variables appears as a product in the cost function. In Equation (8), $J_{ij} = 1$ for all i and j. Each variable in Equation (8) is allocated to one of the chains illustrated in FIG. 8. When there is no overlap, any variable can be allocated to any chain to obtain an appropriate allocation. For example, $s_1$ is allocated to the node 941 in FIG. 8. $s_2$ is allocated to the node 942. $s_3$ is allocated to the chain consisting of the nodes 943a and 943b.

The background of the condition for allocation is as follows. As explained above, when an Ising problem is solved by a quantum annealing machine, products of variables in the cost function of the Ising problem are made to correspond to edges of the Zephyr graph. Therefore, the condition for the allocation of variables to nodes is, naively, that the nodes to which the two variables that appear as a product in the cost function are allocated are directly connected by an edge. However, in a Zephyr graph not every pair of nodes is connected by an edge. Hence, chains are utilized.

The nodes in a chain are allocated the same variables in the Ising problem, so when two chains are connected by an edge, the product of the variables corresponding to those two chains can be represented on the Zephyr graph. Thus, by carefully constructing chains, it is possible to represent all products of variables in the cost function as edges between chains on the Zephyr graph. Indeed, Non patent literature 1 shows one example of such a method. The above is the background of the condition described earlier.

When a problem is solved by allocating variables to nodes on a Zephyr graph and using a quantum annealing machine, there is a point that requires attention. Specifically, the quantum annealing machine does not recognize the existence of chains. In addition, the quantum annealing machine solves the problem while treating the quantum bits of the nodes inside one chain as different variables. However, in order to solve the Ising problem, the same variable of the original Ising problem is allocated to the nodes inside one chain. Therefore, it is required that the quantum-bit states of all nodes inside one chain become identical. Consequently, the coupling between quantum bits corresponding to the edges connecting the nodes inside a chain is strengthened, in such a way that the quantum-bit states of the nodes inside the chain eventually become identical. The strength of this coupling is specified, for example, by the user when the problem is solved on a quantum annealing machine.

The fact that a quantum annealing machine solves a problem by treating different nodes on the Zephyr graph as different variables also implies the following. Namely, for one Ising problem, when variables are allocated to the Zephyr graph by different allocations, the representations of the problem on the Zephyr graph obtained by those different allocations are regarded as different problems by the quantum annealing machine. Therefore, when multiple different allocations exist, which allocation should be used needs to be considered.

For a specific problem the allocation that satisfies the above condition is generally not unique. Among the multiple possible allocations, an allocation that uses fewer nodes is preferable. This is because, when solving a problem on a quantum annealing machine, using many nodes on the Zephyr graph tends to make it more difficult to obtain the correct answer. In addition, it is preferable that there be no bias in the number of nodes used for each variable. This is because it is desirable that the influence of the allocation be made uniform. In particular, the reason why using many nodes makes it more difficult to obtain the correct answer is explained below.

When solving an Ising problem, the larger the number of variables, the larger the number of combinations, and in general the more difficult it becomes to obtain the correct answer. This can also be rephrased as meaning that the computation time until the correct answer is certainly obtained becomes longer. The quantum annealing machine actually solves a problem represented on the Zephyr graph. The number of variables in the problem that the quantum annealing machine solves is the number of nodes used on the Zephyr graph. Therefore, when many nodes are used by the allocation, the number of variables in the problem solved by the quantum annealing machine also increases, and it becomes more difficult to obtain the correct answer. That is, even when the original Ising problem is the same, performing different allocations changes the difficulty of obtaining the correct answer when a quantum annealing machine is used. Therefore, among the multiple possible allocations, an allocation that uses fewer nodes is preferable. Finding an allocation that satisfies the condition for an appropriate allocation and simultaneously uses few nodes is not easy.

Hereinafter, an example embodiment will be explained in which, when the LHZ method is effectively implemented on a Zephyr graph, as a correspondence between the variables of the Ising problem and the nodes of the graph for solving the Ising problem, a correspondence in which the number of nodes used is suppressed and which without bias can be obtained. In the following description, for convenience, the phrase "without bias" is used, but it can be read as "with little bias". For example, whether the bias is small is determined based on whether the bias satisfies a predetermined criterion. The predetermined criterion is a criterion for determining that the bias is small, and, for example, the criterion may be that the bias is smaller than a predetermined value.

<Overview of Example Embodiment>

Before the example embodiment is explained in detail, an overview is explained. The allocation device and allocation method of the present example embodiment represent an Ising problem by the LHZ method and, when the LHZ method is expressed and solved on a Zephyr graph, allocate the variables of the Ising problem to nodes on the Zephyr graph.

The allocation method of the present example embodiment is largely divided into two steps.

The first step is to convert the cost function (Equation (3)) used in the LHZ method to a cost function in which no product of three or more variables appears. As this conversion, for example, the method described in Non patent literature 3 is used. The cost function after conversion is as follows.

[Math. 5]

$$H = -\sum_{i,j} J_{ij}\sigma_{ij} - C\sum_{i,j}\left[-2\tau_{ij}\left(\sigma_{ij} + \sigma_{ij+1} + \sigma_{i+1,j} + \sigma_{i+1,j+1}\right) + \sigma_{i,j}\sigma_{i,j+1} + \sigma_{i,j}\sigma_{i+1,j} + \sigma_{i,j}\sigma_{i+1,j+1} + \sigma_{i,j+1}\sigma_{i+1,j} + \sigma_{i,j+1}\sigma_{i+1,j+1} + \sigma_{i+1,j}\sigma_{i+1,j+1}\right] \quad \text{Equation (9)}$$

In Equation (9) $J_{ij}$, $\sigma_{ij}$, and C are the same as $J_{ij}$, $\sigma_{ij}$, and C in Equation (3), which is the cost function before conversion. In Equation (9) i and j can take the same ranges as i and j in Equation (3). $\tau_{i,j}$ is an Ising variable that can take 1 or -1 and is a newly generated variable (auxiliary variable) by the conversion.

Because the cost function of Equation (9) includes no product of three or more Ising variables, when $\sigma$ and $\tau$ are not distinguished and both are expressed as the Ising variable s, it can be written in the form of Equation (2). In this case the coefficient $J_{ij}$ of $s_i$ and $s_j$ generally differs from the $J_{ij}$ appearing in Equation (9), but it can be calculated and derived based on the values of $J_{ij}$ and C.

The combination of values of $\sigma_{ij}$ that minimizes the cost function of Equation (9) is the same as the combination of values of $(\sigma_{ij}$ that minimizes the cost function of Equation (3). When the cost function is minimized, the values of $\tau_{i,j}$ are also fixed, but they are not included in the solution of the problem (determined by $J_{ij}$) that is being solved. $\tau_{i,j}$ is introduced to decompose the products of four $\sigma$ variables in the cost function of Equation (9) into two products.

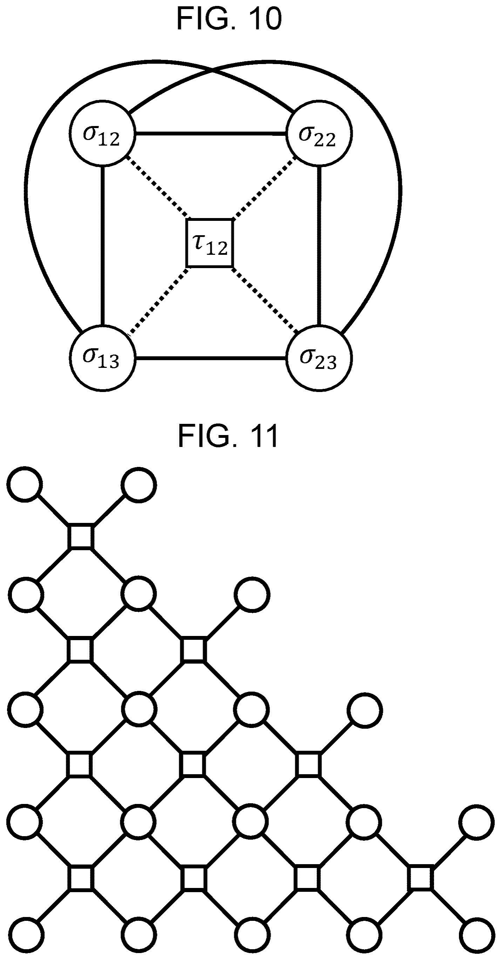

FIG. 9 is an explanatory diagram showing the structure of products among variables in the cost function. When the variables of the cost function expressed by Equation (9) are regarded as variables on lattice points as illustrated in FIG. 5, the products of variables in the cost function can be described as edges between lattice points. The edges between lattice points are not shown in FIG. 9. For example, when only the part of $\sigma_{12}$, $\sigma_{13}$, $\sigma_{22}$, $\sigma_{23}$, and $\tau_{12}$ is taken out and edges are drawn, it becomes as shown in FIG. 6. FIG. 10 is an explanatory diagram showing part of the structure of products among variables in the cost function. Edges between $\sigma$ variables are drawn with solid lines, and edges between $\sigma$ and $\tau$ are drawn with broken lines. The same structure can be seen in other parts of the lattice.

FIG. 11 is an explanatory diagram showing part of the structure of products among variables in the cost function. As a periodic structure that represents the relationships among variables of the cost function, a square lattice as shown in FIG. 11 can also be considered. Circles represent $\sigma$ and squares represent $\tau$. The edges shown in FIG. 11 represent part of the products of variables of the cost function expressed by Equation (9). The products of variables are, for example, products of $\sigma$ and $\tau$. The cost function also includes products of $\sigma$ variables, but they are not shown as edges in FIG. 11. They are products of variables of second-neighbor nodes and third-neighbor nodes based on the spatial distance between nodes in FIG. 11. This lattice structure is used in the second step described below.

The second step is to allocate the variables $\sigma$ and $\tau_{i,j}$ of the cost function of Equation (9), obtained by the conversion in the first step, to multiple nodes on the Zephyr graph. At this time, by constructing chains that contain a small number of nodes, the total number of used nodes is aimed to be small. Additionally, it is aimed that the allocation be without bias. The policy for constructing chains is explained below. In particular, the policy for constructing chains with a small number of nodes and its concrete method are explained.

The basic policy for constructing an allocation with chains of few nodes is to make to correspond the periodic structure that represents the relationships among variables of the cost function of Equation (9) to the periodic structure of the Zephyr graph. The periodic structure for the cost function is the square lattice structure mentioned above. FIG. 11 shows the periodic structure corresponding to the structure illustrated in FIG. 5. As described above, in the square lattice structure, only variables allocated to adjacent lattice points appear as products in the cost function. Being adjacent lattice points means that a product is defined for the variables defined at those lattice points. In the Zephyr graph, the pairs of nodes connected by edges are limited. Nodes connected by an edge can be interpreted as adjacent nodes. By reflecting the square lattice structure on the Zephyr graph, variables that appear as products in the cost function can be allocated to adjacent nodes or to another node adjacent to an adjacent node. Therefore, it becomes unnecessary to make chains long.

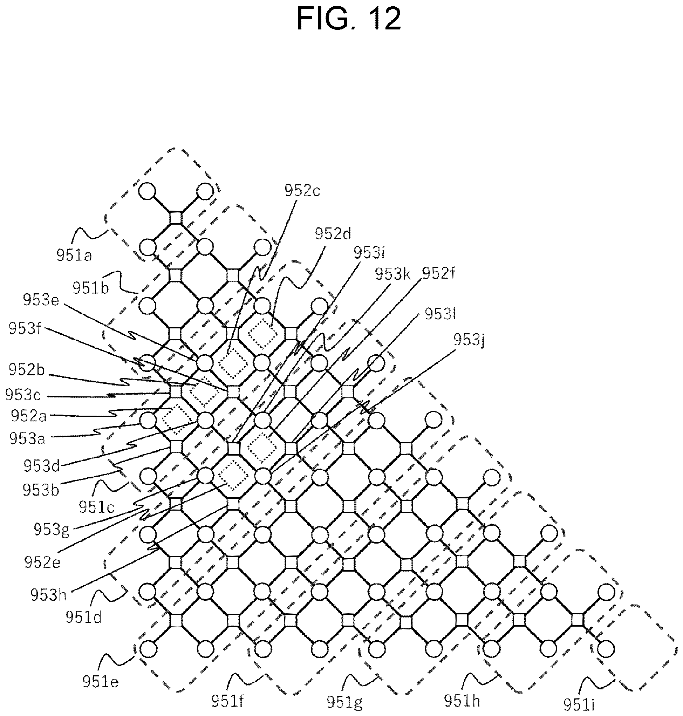

To explain concretely how to make correspond the square lattice structure to the structure of the Zephyr graph, first consider the square lattice (see FIG. 11) that represents the relationships among variables of the cost function of Equation (9). Then, consider dividing this square lattice (see FIG. 11) periodically as shown in FIG. 12. FIG. 12 is an explanatory diagram showing part of the structure of products among variables in the cost function and plaquette rows. A square consisting of four lattice points is called a plaquette. Each part divided by plaquettes is called a plaquette row. Based on the arrangement of variables, plaquettes are classified into two types, type A and type B. A type A plaquette has $\sigma$ on the left and right and $\tau$ on the top and bottom inside the plaquette, for example the plaquette 952a consisting of the nodes 953a, 953b, 953c, and 953d in FIG. 12. A type B plaquette has $\tau$ on the left and right and $\sigma$ on the top and bottom inside the plaquette, for example the plaquette 952b consisting of the nodes 953c, 953d, 953e, and 953f in FIG. 12. A plaquette row is, for example, the region 951c in FIG. 12. Near the edges of the whole set of lattice points representing variables, there are parts that are not complete plaquettes consisting of four lattice points, but including these parts, the lattice is divided periodically, and each part generated by the division is also called a plaquette row. That is, in the present example embodiment, the regions 951a and 951h are also plaquette rows.

Next, consider the structure of the Zephyr graph and make it correspond to the square lattice structure. Especially attention is paid to the unit of the Zephyr graph. A unit consists of eight nodes, but is considered as four parts, i.e., two nodes with $(u, k) = (0, 0)$ and $(0, 1)$, two nodes with $(u, k) = (0, 2)$ and $(0, 3)$, two nodes with $(u, k) = (1, 0)$ and $(1, 1)$, and two nodes with $(u, k) = (1, 2)$ and $(1, 3)$. Each of these four parts is made to correspond to a different lattice point inside one plaquette of the square lattice. In this way, one unit corresponds to one plaquette. When the four parts in each unit are each represented by one point and those points are connected in a square shape as in a plaquette, it is found that the Zephyr graph has a structure in which those squares are arranged periodically. Similar to plaquette rows, the squares consecutive in the direction from the lower left to the upper right, that is, the direction in which coordinate w increases and z decreases, are collectively called a unit row. A unit row is, for example, the region 904 in FIG. 2.

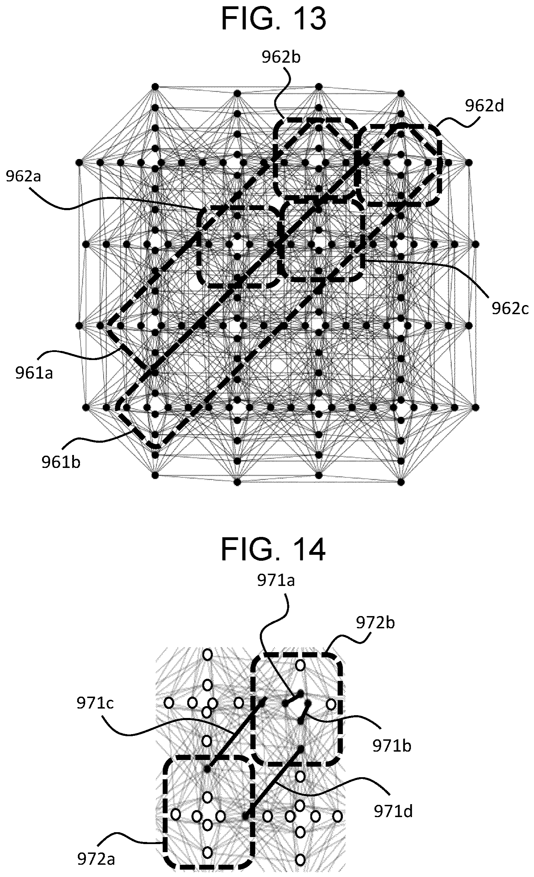

A plaquette row is made to correspond to the unit rows. First, two adjacent plaquettes of the same type are made to correspond to two adjacent units. Two adjacent plaquettes of the same type are plaquettes of the same type in the same plaquette row in which there is an edge between a node inside one plaquette and a node inside the other plaquette. In FIG. 12, for example, plaquette 952a and plaquette 952c are such a pair. Two adjacent units in the Zephyr graph are units in the same unit row in which there is an edge connecting a node inside one unit to a node inside the other unit. In FIG. 13, units 962a and 962b are such a pair. Note here that adjacent plaquettes of the same type are limited to within a plaquette row and adjacent units are also limited to within a unit row. When one plaquette is made to correspond to one unit, the plaquette that is adjacent and located at the upper right and of the same type is made to correspond to the unit that is adjacent and located at the upper right in the Zephyr graph. That is, when plaquette 952a of FIG. 12 is made to correspond to unit 962a of FIG. 13, plaquette 952c of FIG. 12 is made to correspond to unit 962b of FIG. 13. By repeatedly making adjacent plaquettes of the same type correspond to adjacent units in this manner, the entire plaquette row is made to correspond to the unit row. However, which unit in the unit row is made to correspond to the first plaquette may be chosen arbitrarily.

Next, when one plaquette row is made to correspond to one unit row, the plaquette row adjacent to that plaquette row is made to correspond to the unit row adjacent to that unit row. Two adjacent plaquette rows are plaquette rows that have no node overlap with each other and in which there is an edge between a node in one plaquette row and a node in the other plaquette row. For example, the plaquette rows 951c and 951d in FIG. 12 are such a pair. Two adjacent unit rows are unit rows that have no node overlap with each other and in which there is an internal edge or an odd edge between a node in one unit row and a node in the other unit row. For example, the unit rows 961a and 961b in FIG. 13 are such a pair.

As will be explained later with reference to FIG. 12, the allocation unit 102 may execute a process of dividing the plurality of variables into a plurality of processing groups (plaquette sequences) having a periodic structure, in accordance with the reference relationship (or the relationship) in the processing procedure, from information representing a processing procedure for calculating a cost function from the plurality of variables in an Ising problem such as exemplified in equation (9). In other words, the allocation unit 102 identifies, including subscripts, a plurality of variables used in the process (or program) exemplified by equation (9), by performing lexical analysis, syntactic analysis, and the like. The allocation unit 102 determines that, in the case where two variables are multiplied, a reference relationship (or a relationship) exists between the two variables in the process. The allocation unit 102 divides the process (or program) into a plurality of processing groups (plaquette rows) having a periodic structure, by extracting the periodic structure from the relationship. The process of determining the periodic structure may be a method based on the unit structure as described above, or may be a different method.

As described above, in the allocation of variables, the square lattice structure is made to correspond to the structure of the Zephyr graph. That means making a plaquette row correspond to a unit row. All variables in one plaquette row are allocated to nodes in the same unit row. Different plaquette rows are allocated to different unit rows. The product of variables belonging to different plaquette rows is expressed as an edge between different unit rows.

Next, the outline of variable allocation is explained. Focus is placed on allocating the variables of a plaquette row to nodes of a unit row. First, consider one plaquette (for example, the plaquette 952a in FIG. 12). The four variables of the plaquette are allocated to nodes inside one unit (taken as the unit 962a in FIG. 13). Concretely, the variable on the right side of the plaquette is allocated to the node of the unit with $(u, k) = (0, 0)$. The variable on the left side of the plaquette is allocated to the node with $(u, k) = (0, 2)$. The variable on the lower side of the plaquette is allocated to the node with $(u, k) = (1, 1)$. The variable on the upper side of the plaquette is allocated to the node with $(u, k) = (1, 3)$. Among the edges of the plaquette, the edges that connect a variable $\sigma$ to a variable $\tau$ are expressed by internal edges that connect the four nodes in the Zephyr graph. For a type A plaquette, the two $\sigma$ variables are allocated to the two nodes with $u = 0$, and the two $\tau$ variables are allocated to the two nodes with $u = 1$. Because every pair of nodes with different u inside one unit is connected by an internal edge, the nodes to which $\sigma$ is allocated are connected to the nodes to which $\tau$ is allocated by internal edges. In the case of a plaquette of type B as well, the nodes to which $\sigma$ and $\tau$ are allocated are connected by an internal edge. In the cost function of equation (9), there are also products of variables $\sigma$ belonging to the same plaquette. Edges corresponding to these are also necessary, however, there are no edges between nodes with equal u within the same unit. Therefore, nodes to which variables are allocated are added, and chains consisting of nodes with $u = 0$ and $u = 1$ are configured, such that an edge exists between the chains to which $\sigma$ is allocated. Specifically, the right-side variables in the plaquette are allocated to two nodes in the unit with $(u, k) = (0, 0)$ and $(1, 0)$, and the upper-side variables in the plaquette are allocated to two nodes in the unit with $(u, k) = (0, 3)$ and $(1, 3)$. No nodes are added for allocating the left-side and lower-side variables in the plaquette. With these chains, whether the variable $\sigma$ is on the left and right sides or on the upper and lower sides within the plaquette, one $\sigma$ is allocated to a chain consisting of nodes with $u = 0$ and 1, and is therefore connected by an internal edge to the node to which the other $\sigma$ is allocated. Accordingly, a plaquette can be represented using six nodes in the Zephyr graph.

Next, consider the adjacent plaquette of the same type in the same plaquette row (for example, the plaquette 952c in FIG. 12). This plaquette is allocated in the same way to the six nodes of the adjacent unit in the unit row (the unit 962b in FIG. 13). The product of variables that belong to plaquettes 952a and 952c is expressed by edges between the units. When the coordinate of the node of unit 962a with $(u, k) = (0, 2)$ is written as $(0, w, 2, z' \% 2, z' /\!/ 2)$, this unit is specified by $(w, z')$. The unit 962b is specified by $(w + 1, z' - 1)$. The only edges between nodes of unit 962a and unit 962b are internal edges only, and are expressed as follows.

$$(0, w + 1, k_1, z' \% 2, z' /\!/ 2) - (1, z', k_2, (w + 1) \% 2, (w + 1) /\!/ 2), (1, z', k_3, w \% 2, w /\!/ 2) - (0, w + 1, k_4, (z' - 1) \% 2, (z' - 1) /\!/ 2) \qquad \text{Equation (10)}$$

where $k_1, k_2 = 0, 1$ and $k_3, k_4 = 2, 3$.

Plaquette 952a and plaquette 952c in FIG. 2 are both plaquettes of type A, that is, plaquettes in which the $\sigma$ variables is located at the left and right nodes within the plaquette. Among the two $\sigma$ variables of a type A plaquette, the left one is called $\sigma_{left}$ and the right one is called $\sigma_{right}$, while among the two $\tau$ variables, the upper one is called $\tau_{top}$ and the lower one is called $\tau_{bottom}$. In the cost function, $\sigma_{left}$ of plaquette 952a forms a product with $\sigma_{left}$ of plaquette 952c, so the related nodes in the Zephyr graph must have an edge. $\sigma_{left}$ of plaquette 952a is allocated to the node $(0, w, 2, z' \% 2, z' /\!/ 2)$. This node has no edge to the node $(0, w + 1, 2, (z' - 1) \% 2, (z' - 1) /\!/ 2)$ to which $\sigma_{left}$ of plaquette 952c is allocated. Therefore, a chain must be constructed for one of the $\sigma$ variables so that the nodes to which the two $\sigma$ variables are allocated are connected by an edge. Hence, $\sigma_{left}$ of plaquette 952c is allocated to the chain that consists of the two nodes $(0, w + 1, 2, (z' - 1) \% 2, (z' - 1) /\!/ 2)$ and $(1, z', 2, w \% 2, w /\!/ 2)$ and the internal edge between them. The node $(1, z', 2, w \% 2, w /\!/ 2)$ of this chain has an internal edge to the node $(0, w, 2, z' \% 2, z' /\!/ 2)$ to which $\sigma_{left}$ of plaquette 952a is allocated. In the cost function, $\sigma_{right}$ of plaquette 952a forms a product with $\sigma_{left}$, $\sigma_{right}$, and $\tau_{bottom}$ of plaquette 952c, respectively. The node to which $\sigma_{right}$ of plaquette 952a is allocated has an internal edge with each of the three variables of plaquette 952c. In particular, due to the construction of the above-mentioned chain, $\sigma_{right}$ of plaquette 952a is connected to $\sigma_{left}$ of plaquette 952c by an internal edge. In the cost function, $\tau_{top}$ of plaquette 952a forms a product with $\sigma_{left}$ of plaquette 952c. There is an internal edge between the nodes to which these two variables are allocated. In the cost function, $\tau_{bottom}$ of plaquette 952a does not form a product with any variable of plaquette 952c.

In the same way, in the case where both plaquette 952b and plaquette 952d are plaquettes of type B, all products between the variables can also be represented by edges. However, in this case, the $\sigma$ located at the lower side within plaquette 952d is allocated to a chain consisting of two nodes (1, z', 1, (w + 1) % 2, (w + 1) // 2) and (0, w + 1, 1, z' % 2, z' // 2) and an internal edge between them.

In order to handle both the case of a type A plaquette and the case of a type B plaquette, the left variable of plaquette 952c is allocated to a chain consisting of two nodes (0, w + 1, 2, (z' - 1) % 2, (z' - 1) // 2) and (1, z', 2, w % 2, w // 2) and an internal edge between them. In addition, the lower variable of plaquette 952c is allocated to a chain consisting of two nodes (1, z', 1, (w + 1) % 2, (w + 1) // 2) and (0, w + 1, 1, z' % 2, z' // 2) and an internal edge between them. By the above, with two units 962a and 962b, all the variables of the two plaquettes 952a and 952c and their products can be represented. Likewise, with the two units 962a and 962b, all the variables of the two plaquettes 952b and 952d and their products can also be represented.

Summarizing the allocation described thus far, the four variables of a plaquette are each allocated to a chain consisting of two nodes and an internal edge between them. For the purpose of simplifying the description, the chains consisting of two nodes and an internal edge between them are classified into the following two types, and the position of each chain is specified by its coordinates. A chain A (w, k, z') consists of two nodes (0, w, k, z' % 2, z' // 2) and (1, z', k, w % 2, w // 2), and an internal edge connecting them. A chain B (w, k, z') consists of two nodes (0, w, k, z' % 2, z' // 2) and (1, z' + 1, k, (w - 1) % 2, (w - 1) // 2), and an internal edge connecting them.

Chain A (w, $k_1$, z') has internal edges to the following chains.

Chain A (w, $k_2$, z' - 1), Chain A (w + 1, $k_2$, z' - 1), Chain A (w - 1, $k_2$, z'), Chain A (w, $k_1$', z'), Chain A (w + 1, $k_2$, z'), Chain A (w - 1, $k_2$, z' + 1), Chain A (w, $k_2$, z' + 1), Chain B (w, $k_2$, z' - 1), Chain B (w + 1, $k_1$', z' - 1), Chain B (w, $k_1$', z'), Chain B (w + 1, $k_2$, z'). Here $k_1$' differs from $k_1$, and $k_2$ may be equal to or different from $k_1$.

Chain B (w, $k_1$, z') has internal edges to the following chains.

Chain A (w - 1, $k_2$, z'), Chain A (w, $k_1$', z'), Chain A (w - 1, $k_1$', z' + 1), Chain A (w, $k_2$, z'), Chain B (w, $k_2$, z' - 1), Chain B (w + 1, $k_2$, z' - 1), Chain B (w - 1, $k_2$, z'), Chain B (w, $k_1$', z'), Chain B (w + 1, $k_2$, z'), Chain B (w - 1, $k_2$, z' + 1), Chain B (w, $k_2$, z' + 1). Here $k_1$' differs from $k_1$, and $k_2$ may be equal to or different from $k_1$.

When a plaquette is made to correspond to the unit (w, z') (unit 972b in FIG. 14), its upper variable is allocated to Chain A (w, 3, z') (chain 971a in FIG. 14), its right variable is allocated to Chain B (w + 1, 0, z') (chain 971b), its left variable is allocated to Chain B (w, 2, z') (chain 971c), and its lower variable is allocated to Chain A (w, 1, z' + 1) (chain 971d). Hereafter, when a plaquette is said to be allocated to unit (w, z'), it means that each variable is allocated to those four chains as above. Note, however, that the chains for the left and lower variables include nodes belonging to unit (w, z' + 1) (unit 972a in FIG. 14).

By repeating the above processing, the variables of the plaquette row and the products of the variables within the plaquette row are appropriately allocated to the nodes of the unit row. And the length of the chain for each variable is 2.

Next, consider representing the product of variables that belong to adjacent plaquette rows (plaquette rows 951c and 951d in FIG. 12) by edges between adjacent unit rows. Concretely, consider the product of variables that belong to plaquettes 952a and 952e in FIG. 12. The variables of plaquette 952a and those of plaquette 952e are allocated to unit rows 961a and 961b in FIG. 13, respectively. In particular, consider the case where the variables of the plaquette 952a are allocated to the unit 962b in FIG. 13. Let the coordinates of the unit 962b be (w, z'). In this case, there are three options for which unit in the unit row 961b the variables of the plaquette 952e are to be allocated. These are the unit 962d, the unit 962c, and both the unit 962d and the unit 962c. Allocating to both the unit 962c and the unit 962d means the following allocations. Thus, the left variable of the plaquette 952e is allocated to the chain A (w-1, 3, z'), the bottom variable is allocated to the chain B (w, 0, z'), the top variable is allocated to the chain B (w, 2, z'-1), and the right variable is allocated to the chain A (w, 1, z'). The products of the variables belonging to the plaquette 952a and the plaquette 952e can all be made to correspond to internal edges between chains in each of the above three allocation methods. These three allocation methods are distinguished by the three values 0, 1, and 2 of the parameter $r_i$ (i = 1, 2, ..., N-2) introduced here. Since the number of unit rows is N-1 and allocations to adjacent units are required N-2 times, the number of r parameters is also N-2.

By repeating the above processing, every product between variables belonging to a first plaquette row and a second plaquette row can be represented as an internal edge between the first unit row and the second unit row. No new chains are introduced to represent the products between plaquette rows, and no additional nodes are added to existing chains. Therefore, the length of every chain remains 2.

In the processing above, both variables $\sigma$ and variables $\tau$ were allocated to chains of length 2, but for variables $\tau$ the chain length can be reduced to 1. For each $\tau$ chain allocated above, either of its two nodes has internal edges to every chain of $\sigma$ that forms a product with that $\tau$ in the cost function. That is, any product involving a given $\tau$ in the cost function can be represented by only one of the two nodes of its chain. Consequently, allocating $\tau$ to just one of the two nodes is sufficient. Either node of the $\tau$ chain may be chosen arbitrarily.

When variables are allocated, the chain type and its coordinates are specified, thereby uniquely specifying the nodes used. Once the chain to which a single Ising variable is allocated has been determined, the above procedure can allocate all variables. However, after a plaquette row is allocated to a unit row, there are the three allocation styles mentioned above when allocating an adjacent plaquette row to an adjacent unit row. With these allocations, every product of variables is represented as an edge of the Zephyr graph. As explained later in detail, the parameters used to determine the first Ising-variable allocation are denoted $c_0$, $w_0$, and $z'_0$. These parameters can be regarded as criteria for making correspond the repeated structure that represents relationships among variables in the cost function to the repeated structure inherent in the Zephyr graph. Therefore, as will be explained later, such predetermined criteria enable the correspondence between the repeated structure in the cost function and that in the Zephyr graph.

Hereinafter, the example embodiment is explained in detail with reference to the drawings.

[Description of Configuration]

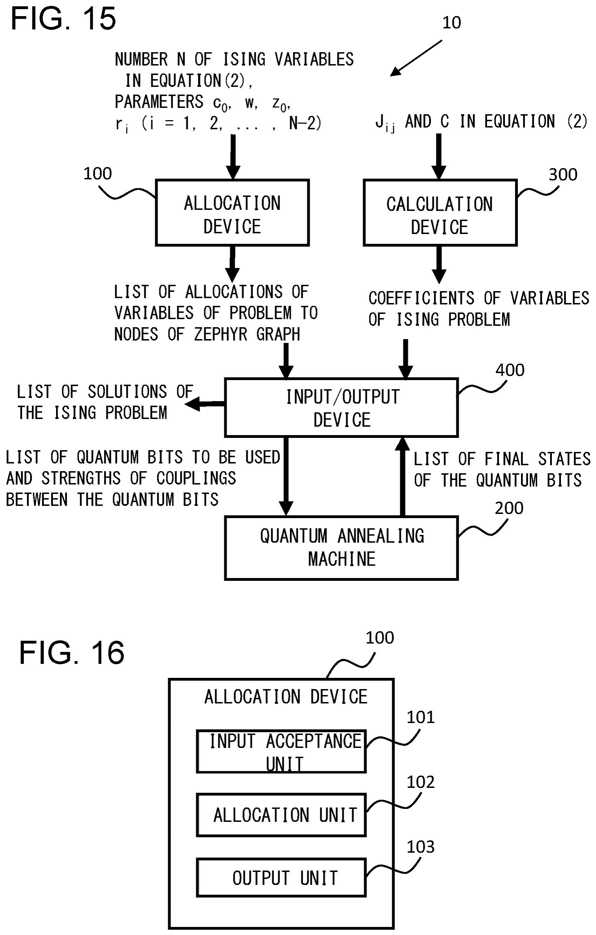

FIG. 15 is an explanatory diagram showing an example of a computing system 10 according to the present example embodiment. In the present example embodiment, an allocation device 100 determines a correspondence between the variables of an Ising problem and nodes. In the computing system 10 shown in FIG. 15, it is assume that a quantum annealing machine 200 is used to solve the Ising problem. Instead of the quantum annealing machine 200, any other device that solve the Ising problem by using a Zephyr graph may be used. The computing system 10 further includes, as auxiliary devices for inputting the problem to the quantum annealing machine 200 and obtaining an output of the computation result, a calculation device 300 and an input/output device 400. Thus, in the example shown in FIG. 15, the computing system 10 has the allocation device 100, the quantum annealing machine 200, the calculation device 300, and the input/output device 400.

The allocation device 100 receives, as inputs, the number N of Ising variables of the Ising problem and the parameters for allocation, namely $c_0$, $w_0$, $z'_0$, and $r_i$ ($i = 1, 2, ... , N-2$), and outputs information indicating a correspondence between the variables of the Ising problem and the nodes of the Zephyr graph. In the present example embodiment, the information indicating the correspondence between the variables of the Ising problem and the nodes of the Zephyr graph is input to the input/output device 400. The input of information to the input/output device 400 may be performed through a user's input operation or may be input directly from the allocation device 100. The coefficients of the variables of the Ising problem are input to the input/output device 400. The input of the coefficients to the input/output device 400 may be performed through a user's input operation or may be input directly from the calculation device 300. The input/output device 400 is a device that perform the input/output processing to and from the quantum annealing machine 200. Based on the output results of the allocation device 100 and the calculation device 300, the input/output device 400 outputs, to the quantum annealing machine 200, the quantum bits to be used and the coupling strengths between quantum bits. In addition, the input/output device 400 acquires the final states of the quantum bits from the quantum annealing machine 200 and outputs the solution of the Ising problem.

The allocation device 100, the calculation device 300, and the input/output device 400 are general-purpose computers, that is, so-called classical computers. A part or the whole of the functions of the calculation device 300 and the input/output device 400 may be incorporated into the allocation device 100.

A part or the whole of the allocation device 100, the quantum annealing machine 200, the calculation device 300, and the input/output device 400 may be achieve by cloud computing. for example, only the quantum annealing machine 200 and the input/output device 400 may be achieve by cloud computing. When only the quantum annealing machine 200 and the input/output device 400 are achieve by cloud computing, the outputs from the allocation device 100 and the calculation device 300 may be input to the input/output device 400 via a network. The output of the input/output device 400 is input to the quantum annealing machine 200, and the output from the quantum annealing machine 200 is input to the input/output device 400. Furthermore, the output of the computation result from the input/output device 400 is performed via the network.

As describe above, the allocation device 100 receives, as inputs, the number N of Ising variables of the Ising problem and the parameters $c_0$, $w_0$, and $z'_0$ of the nodes to which the Ising variable $\sigma_{1,2}$ is allocated. The allocation device 100 outputs information indicating to which nodes on the Zephyr graph the Ising variables of the cost function (Equation (2)) are allocated based on the representation of the cost function.

The c calculation device 300 receives, as inputs, $J_{ij}$, which are the coefficients of the variables of the Ising problem to be solved, and C, which is a parameter to be adjusted in a positive value range. The calculation device 300 calculate and output the coefficients of the Ising variables of the cost function expressed by Equation (9) based on these inputs. The coefficients of the Ising variables mean $J_{ij}$ in Equation (2) when Equation (9) is express in the form of Equation (2). Concretely, the calculation device 300 outputs a list of the coefficients of the variables $\sigma_{ij}$ and the coefficients of the products of $\sigma_{ij}$ and $\sigma_{kl}$ for $i = 1, 2, ... , N$; $j = i, i+1, i+2, ... , N$; $k = 1, 2, ... , N$; and $l = k, k+1, k+2, ... , N$.

The output of the allocation device 100 (allocation result) and the output of the calculation device 300 (coefficients of the Ising variables) are input to the input/output device 400. Furthermore, the user specifies the coupling strength (chain strength) between quantum bits corresponding to the edges that connect the nodes inside each chain and input that strength value to the input/output device 400. As this value, a value in such a way that the quantum-bit states of all nodes inside each chain become identical is input. The chain strength specified here is assume to be identical for all chains.

The input/output device 400 determines the quantum bits to be used in the quantum annealing machine 200 by using the allocation result, the coefficients of the Ising variables, and the chain strength, and calculates the coupling strength between the quantum bits. The coupling strength between the quantum bits calculated here includes the coupling strength corresponding to the edges within the chains. All the coupling strengths are equal to the specified chain strength. Then, the input/output device 400 inputs the list of quantum bits to be used and the coupling strength between the quantum bits into the quantum annealing machine 200.

The quantum annealing machine 200 implements the coupling strength between the quantum bits specified by the input, in the quantum bits specified by the input. Then, the quantum annealing machine 200 execute quantum annealing and output, to the input/output device 400, a list indicating the final states of the quantum bits. The input/output device 400 convert the list indicating the states of the quantum bits to a list indicating the values of the Ising variables. The input/output device 400 output the list to an output device (not shown), for example, a display or an electronic file.

The relationship between the Zephyr graph and the quantum annealing machine is as described above. That is, which quantum bit and which quantum bit are coupled in the quantum annealing machine 200 is related to the structure of the Zephyr graph. In other words, the quantum bits correspond to the nodes of the Zephyr graph, and the couplings between the quantum bits correspond to the edges of the Zephyr graph. Each quantum bit has two states, and the quantum annealing machine 200 can treat the state as a binary variable. The quantum annealing machine 200 can make correspond this binary variable to a variable of the Ising problem. By making the Ising problem correspond to the Zephyr graph and making the values of the Ising variables allocated to the nodes on the Zephyr graph correspond to the states of the quantum bits, the quantum annealing machine 200 can solve the Ising problem. However, as described above, when making the Ising problem correspond to the Zephyr graph, the quantum annealing machine 200 appropriately allocate the variables of the Ising problem to the nodes on the Zephyr graph.

Next, the allocation device 100 will be explained in detail. FIG. 16 is a block diagram illustrating an example configuration of the allocation device 100. As shown in FIG. 16, the allocation device 100 includes an input acceptance unit 101, an allocation unit 102, and an output unit 103. The input acceptance unit 101 receives as inputs the number N of variables in the Ising problem and the parameters $c_0$, $w_0$, and $z'_0$ for allocating the Ising variable $\sigma_{1,2}$. This input is performed, for example, through an input device such as a keyboard. For example, a user inputs the number N of variables of the Ising problem to be solved and concrete values for $c_0$, $w_0$, and $z'_0$.

The allocation unit 102 performs processing to allocate the Ising variables of the Ising problem to nodes on the Zephyr graph. That is, the allocation unit 102 reflects the periodic structure in the cost function of the Ising problem in the periodic structure of the Zephyr graph and allocates each Ising variable to a node of the Zephyr graph.

The output unit 103 outputs information indicating the correspondence between the binary variables and the nodes based on the allocation result of the allocation unit 102. for example, the output unit 103 outputs, to an output device such as a display, information indicating the correspondence. The output unit 103 outputs, for example, a list showing the correspondence between the binary variables and the nodes. For example, the output unit 103 outputs, for i = 1, 2, ... , N and j = i+1, i+2, ... , N, a list enumerating the nodes on the Zephyr graph to which the Ising variables $\sigma_{i,j}$ and $\tau_{i,j}$ are allocated. For example, when the allocation unit 102 allocates the Ising variable $\sigma_{1,2}$ to nodes 0 and 1, $\sigma_{2,3}$ to nodes 2 and 3, $\tau_{1,2}$ to nodes 4 and 5, and $\tau_{2,3}$ to nodes 6 and 7, the output unit 103 outputs information expressed as $\{\sigma_{1,2}:[0,1], \sigma_{2,3}:[2,3], \tau_{1,2}:[4,5], \tau_{2,3}:[6,7]\}$.

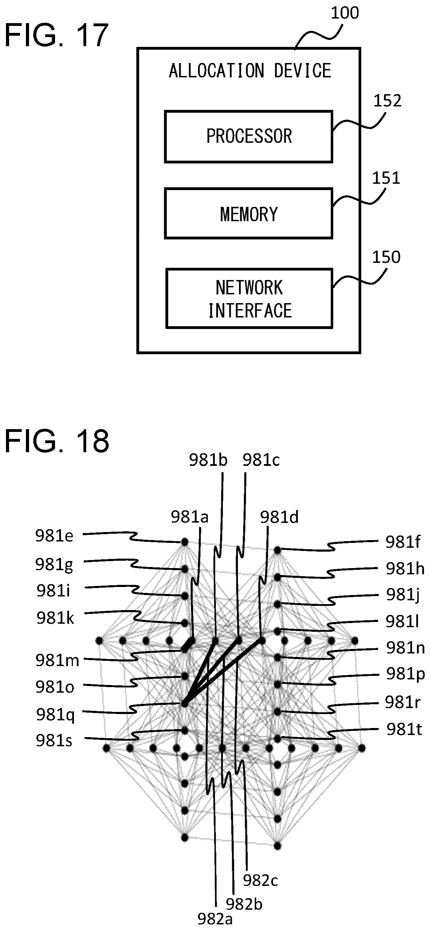

FIG. 17 is a block diagram illustrating an example hardware configuration of the allocation device 100. The allocation device 100 shown in FIG. 17 includes a network interface 150, a memory 151, and a processor 152. The network interface 150, the memory 151, and the processor 152 are interconnected via a data bus and the like.

The network interface 150 is used to communicate with any other device. The network interface 150 may include, for example, a network interface card (NIC).

The memory 151 is configured, for example, by a combination of volatile memory and non-volatile memory. The memory 151 is used to store software (computer programs) that include one or more instructions executed by the processor 152 and data used for various processes of the allocation device 100.

The processor 152 performs the processing of each component shown in FIG. 16 by reading and executing the software (computer programs) from the memory 151.

The processor 152 is, for example, a microprocessor, an MPU (Micro Processor Unit), or a CPU (Central Processing Unit). The processor 152 may include a plurality of processors.

Thus, the allocation device 100 can be achieve by a device that functions as a computer (information processing device).

The above-described programs can be stored in various types of non-transitory computer-readable media and supplied to a computer. Non-transitory computer-readable media include various types of tangible storage media. Examples of non-transitory computer-readable media are magnetic recording media (for example, flexible disks, magnetic tapes, hard disks), magneto-optical recording media (for example, magneto-optical disks), CD-ROM (Read Only Memory), CD-R, CD-RW, and semiconductor memories (for example, mask ROM, PROM, EPROM, flash ROM, RAM). The programs may also be supplied to a computer by various types of transitory computer-readable media. A transitory computer-readable medium is, for example, RAM. The programs may be supplied to a computer via a wired communication path such as an electric wire or an optical fiber, or via a wireless communication path.

Hereinafter, the allocation by the allocation unit 102 will be explained.

As described above, when the allocation unit 102 performs an allocation, it specifies the position of a unit and the type of a chain. Therefore, the method for specifying nodes of the Zephyr graph is explained first. Then, the method for specifying the position of a unit is explained, and after that, the types of chains are explained.

As described above, the coordinates of a node on the Zephyr graph are represented by (u, w, k, j, z). The possible values are u = 0, 1, w = 0, 1, ... , 2m, k = 0, 1, 2, 3, j = 0, 1, z = 0, 1, ... , m-1. The parameter m represents the overall size of the Zephyr graph. Hereafter, unless otherwise stated, m is assumed to be large enough to achieve an appropriate allocation. However, when the allocation device 100 outputs the list of allocations of Ising variables to nodes, the coordinates of the nodes themselves are not used in the output. Instead, a node number uniquely determined from the coordinates is used. When the coordinates of a node are (u, w, k, j, z) and the node number is x, x is given by Equation (11).

[Math. 6]

$$x = z + m(j + 2(k + 4(w + (2m + 1)u))) \qquad \text{Equation (11)}$$

Note that the processing of converting from (u, w, k, j, z) to x is not limited to the processing exemplified by Equation (11). Any processing that converts different two coordinates (u, w, k, j, z) to different x values may be used.

In the following explanation, however, the coordinates (u, w, k, j, z) are used instead of the above x.

Next, the method by which the allocation unit 102 specifies the position of a unit is explained. A unit (w, z') consists of eight nodes having the relationships (0, w, 2, z'%2, z'//2), (0, w, 3, z'%2, z'//2), (0, w+1, 0, z'%2, z'//2), (0, w+1, 1, z'%2, z'//2), (1, z', 2, w%2, w//2), (1, z', 3, w%2, w//2), (1, z'+1, 0, w%2, w//2), (1, z', 1, w%2, w//2). Here, when a natural number a is divided by a natural number b, a%b denotes the remainder and a//b denotes the integer part. The nodes inside a unit can be specified by the u and k values of the coordinates of the nodes. The units that belong to the same unit row as the unit (w, z') and are adjacent to it are the unit (w-1, z'+1) and the unit (w+1, z'-1). The former is called the lower-left adjacent unit and the latter is called the upper-right adjacent unit.

Next, the method for specifying a chain is explained. Chains consisting of two nodes and the internal edge between them are classified into the following two kinds, and their positions are specified by their coordinates. Chain A (w, k, z') consists of the two nodes (0, w, k, z'%2, z'//2) and (1, z', k, w%2, w//2) and the internal edge between them. Chain B (w, k, z') consists of the two nodes (0, w, k, z'%2, z'//2) and (1, z'+1, k, (w-1)%2, (w-1)//2) and the internal edge between them.

The processing of the allocation unit 102 comes down to making each variable correspond to each chain described above when allocating variables. However, as described above, when a variable $\tau$ is allocated to only one of the two nodes of its chain, every product in which that variable $\tau$ appears in the cost function can be represented. Therefore, after allocating each variable $\tau$ to the above chains, the allocation is changed so that the variable $\tau$ is allocated to only one node of its chain.

Hereinafter, a specific method by which the allocation unit 102 performs the allocation of variables by specifying the type and coordinates of the chain will be explained.

As described above, the allocation unit 102 allocates in such a way that a plaquette row in the square-lattice structure of Ising variables corresponds to a unit row. First, the method by which the allocation unit 102 makes one plaquette correspond to one unit is shown. Consider one plaquette consisting of the Ising variables ($\sigma_{ij}$, $\tau_{i,j}$, $\tau_{i,j-1}$, $\sigma_{i+1,j}$. In FIG. 12, it is assumed that the Ising variables $\sigma_{i,j}$, $\tau_{i,j}$, $\tau_{i,j-1}$, $\sigma_{i+1,j}$ are respectively the Ising variables 953a, 953b, 953c, 953d. The plaquette is assumed to be the plaquette 952a. This plaquette is a type A plaquette in which the variables $\sigma$ are on the left and right inside the plaquette and the variables $\tau$ are on the top and bottom. This plaquette is made to correspond to the unit (w, z'). However, w and z' are determined from the parameters input to the input acceptance unit 101, but are not specifically defined in this explanation. Assume that the unit (w, z') is the unit 962a in FIG. 13. The allocation unit 102 allocates each Ising variable of the plaquette 952a to the chains Chain B (w, 2, z'), Chain A (w, 1, z'+1), Chain A (w, 3, z'), Chain B (w+1, 0, z'), respectively. When the unit (w, z') is the unit 972b in FIG. 14, these four chains are the chains 971c, 971d, 971a, 971b, respectively.

Next, the method by which the allocation unit 102 makes a plaquette row correspond to a unit row is explained. Within the plaquette row 951c to which the plaquette 952a belongs, consider the plaquette 952c that is two plaquettes away from the plaquette 952a. The plaquette 952c consists of the Ising variables $\sigma_{i+1,j-1}$, $\tau_{i+1,j-1}$, $\tau_{i+1,j-2}$, $\sigma_{i+2,j-1}$. The allocation unit 102 allocates these four variables to the chains belonging to the unit (w+1, z'-1), which is the upper-right adjacent unit of the unit (w, z'). These two units are the units 962a and 962b in FIG. 13. By repeating this, the allocation unit 102 can allocate every Ising variable in the plaquette row 951c to chains that consist of nodes in the same unit row. Therefore, once it is determined to which unit one plaquette in a plaquette row is allocated, the allocations of every plaquette in that plaquette row are fixed. Thus, the allocation unit 102 can be said to determine the allocations in such a way that each processing group (that is, plaquette row) is processed by one group (unit row) in accordance with predetermined group information in which multiple components (units) in the hardware of the quantum annealing machine are grouped (unit rows) according to the connection relationships among the components. With this processing, the allocation can be performed in such a way that there is little bias in the number of nodes and the number of nodes used is small, because each processing group having a periodic structure is allocated to each group in accordance with the periodic structure inherent in the hardware configuration of the quantum annealing machine.

A method by which the allocation unit 102 makes one plaquette of type B correspond to one unit is also shown. Consider one plaquette consisting of the Ising variables $\tau_{i,j-1}$, $\sigma_{i+1,j}$, $\sigma_{i+1,j-1}$, $\tau_{i+1,j-1}$. In FIG. 12, it is assumed that the Ising variables $\tau_{i,j-1}$, $\sigma_{i+1,j}$, $\sigma_{i+1,j-1}$, $\tau_{i+1,j-1}$ are the Ising variables 953c, 953d, 953e, 953f. The plaquette is assumed to be the plaquette 952b. This plaquette is a type B plaquette in which the variables $\sigma$ are on the top and bottom inside the plaquette and the variables $\tau$ are on the left and right. The allocation unit 102 allocates each Ising variable of the plaquette 952b to the chains Chain B (w, 2, z'), Chain A (w, 1, z'+1), Chain A (w, 3, z'), Chain B (w+1, 0, z'), respectively.

Next, consider adjacent plaquette rows. In the example shown in FIG. 12, the plaquette row adjacent to the above plaquette row 951c is the plaquette row 951d. The Ising variables included in the plaquette row 951d are allocated to chains in the adjacent unit row. The allocation unit 102 selects units to allocate in such a way that the products of Ising variables in adjacent plaquette rows are represented by edges between nodes. Consider a plaquette consisting of the Ising variables $\sigma_{i,j}$, $\tau_{i,j}$, $\tau_{i,j-1}$, $\sigma_{i+1,j}$ and a plaquette consisting of the Ising variables $\sigma_{i+1,j+1}$, $\tau_{i+1,j+1}$, $\tau_{i+1,j}$, $\sigma_{i+2,j+1}$. Both plaquettes are type A. In FIG. 12, those plaquettes are the plaquette 952a consisting of the Ising variables 953a, 953b, 953c, 953d and the plaquette 952e consisting of the Ising variables 953g, 953h, 953i, 953j. Assume that the allocation unit 102 allocates the Ising variables 953a, 953b, 953c, 953d of the plaquette 952a, in this order, to the chains Chain B (w, 2, z'), Chain A (w, 1, z'+1), Chain A (w, 3, z'), Chain B (w+1, 0, z') related to the unit (w, z'). Assume that the unit (w, z') is the unit 962b in FIG. 13. The allocation unit 102 allocates the plaquette 952c to one of a chain related to the unit (w+1, z') that is the unit 962d, a chain related to both the unit (w+1, z') and the unit (w, z'+1) that is the units 962d and 962c, and a chain related to the unit (w, z'+1) that is the unit 962c. The chains related to both the unit (w+1, z') and the unit (w, z'+1) are Chain A (w, 3, z'+1), Chain B (w+1, 0, z'+1), Chain B (w+1, 2, z'), Chain A (w+1, 1, z'+1). Any of these three allocation styles may be chosen arbitrarily. The Ising variables 953g, 953h, 953i, 953j of the plaquette 952e are allocated in this order to those chains. In the first and third of the above allocation styles, a type A plaquette in the plaquette row 951d corresponds to a unit, and in the second style, a type B plaquette in the plaquette row 951d corresponds to a unit. In this way, when the unit to which one plaquette row is allocated is determined, the unit to which the adjacent plaquette row is allocated is determined. However, there are the above three methods for allocation, and which method to use must be determined at the time of allocation. With these allocations, every product of Ising variables belonging to adjacent plaquettes is made to correspond to internal edges of the Zephyr graph.

When a type A plaquette in a plaquette row is made to correspond to a unit, how an adjacent plaquette row is allocated has been explained. Next, when a type B plaquette in a plaquette row is made to correspond to a unit, how an adjacent plaquette row is allocated is explained below. This corresponds to how to allocate the next plaquette row when the above second allocation style is performed.

Assume that a plaquette consisting of the Ising variables $\tau_{i-1,j}$, $\sigma_{i,j+1}$, $\sigma_{i-1,j+1}$, $\tau_{i-1,j+1}$ is allocated, in this order, to the chains Chain B (w, 2, z'), Chain A (w, 1, z'+1), Chain A (w, 3, z'), Chain B (w+1, 0, z') of the unit (w, z'). In the example shown in FIG. 12, this plaquette is the plaquette 952b consisting of the Ising variables 953c, 953d, 953e, 953f. The plaquette 952b belongs to the plaquette row 951c. Consider a plaquette consisting of the Ising variables $\tau_{i,j+1}$, $\sigma_{i+1,j+2}$, $\sigma_{i,j+2}$, $\tau_{i,j+2}$ included in the adjacent plaquette row. In the example shown in FIG. 12, this plaquette is the plaquette 952f consisting of the Ising variables 953i, 953j, 953k, 953l. The plaquette 952f belongs to the plaquette row 951d. The allocation unit 102 allocates the plaquette 952f to chains related to the unit (w+1, z'), to chains related to both the unit (w+1, z') and the unit (w, z'+1), or to chains related to the unit (w, z'+1). Any of these three allocation styles may be chosen arbitrarily. Then, the allocation unit 102 allocates the Ising variables $\tau_{i,j+1}$, $\sigma_{i+1,j+2}$, $\sigma_{i,j+2}$, $\tau_{i,j+2}$, in this order, to those chains. In the first and third of the above allocation styles, a type B plaquette in the plaquette row 951d corresponds to a unit, and in the second style, a type A plaquette in the plaquette row 951d corresponds to a unit.

When the allocation unit 102 determines the kind and position of the chain to which one Ising variable is allocated, the chains to which the other variables in the plaquette containing that variable are allocated are determined. Thus, the allocation of the first plaquette is determined. Further, the allocations of the other plaquettes in the plaquette row to which that plaquette belongs are determined. Then, by repeatedly specifying which of the three allocation styles is used for the adjacent plaquette row, the units to which all plaquettes are allocated are determined. With the allocation method described above, the chains to which all plaquettes, that is, all variables, are allocated are determined.

In the present example embodiment, the allocation unit 102 first specifies the chain to which the Ising variable $\sigma_{1,2}$ is allocated. Next, the allocation unit 102 considers adjacent plaquette rows in order and specifies the chains to which the Ising variables $\sigma_{i,i+1}$ for i = 3, 4, ... , N-1 are allocated. After that, the allocation unit 102 performs the allocation of the other Ising variables. When specifying a chain, the allocation unit 102 uses the function c[i], which represents the kind of chain. When i is 0, the kind of chain is Chain A. When i is 1, the kind of chain is Chain B.

Let the chain to which the Ising variable $\sigma_{1,2}$ is allocated be expressed as $c[c_1]$ $(w_1, 3-c_1, z_1)$. Here, $c_1$ is either 0 or 1. Let the chain to which the Ising variable $\sigma_{2,3}$ is allocated be expressed as $c[c_2]$ $(w_2, k_2, z_2)$. The plaquette row to which the Ising variable $\sigma_{2,3}$ belongs is adjacent to the plaquette row to which the Ising variable $\sigma_{1,2}$ belongs. Depending on which of the three allocation methods for adjacent plaquette rows is used, $(c_2, w_2, k_2, z_2)$ becomes $(c_1, w_1+1, k_1, z_1)$, $(1- c_1, w_1+1- c_1, 5- k_1, z_1+ c_1)$, or $(c_1, w_1, k_1, z_1+1)$. The three allocation methods is distinguished by a newly introduced variable $r = 0,1,2$, and $(c_2, w_2, k_2, z_2)$ corresponding to the method is expressed as $(c_1+r_1(r_1-2)(2 c_1-1), w_1+1-r(r-1)/2+r(r-2) c_1, (r-1)(r-1) k_1-r(r-2)(5- k_1), z_1+r(r-1)/2-r(r-2) c_1)$. Similarly, when $\sigma_{i,i+1}$ is allocated to the chain $c[c_i]$ $(w_i, k_i, z_i)$ and the method of allocating the plaquette row containing $\sigma_{i+1,i+2}$ is $r_i$, the kind $c_{i+1}$ of the chain to which $(\sigma_{i+1,i+2}$ is allocated and the coordinates $(w_{i+1}, k_{i+1}, z_{i+1})$ are determined by the following relationships.

$$c_{i+1} = c_i + r_i(r_i -2)(2c_i-1) \qquad \text{Equation (12)}$$

$$w_{i+1} = w_i + 1 - r_i (r_i -1)/2 + r_i (r_i -2)c_i \qquad \text{Equation (13)}$$

$$k_{i+1} = (r_i -1)( r_i -1)k_i - r_i (r_i -2)(5-k_i) \qquad \text{Equation (14)}$$

$$z_{i+1} = z_i + r_i (r_i -1)/2 - r_i (r_i -2)c_i \qquad \text{Equation (15)}$$

Based on this rule the allocation unit 102 can sequentially allocate the Ising variables ($\sigma_{i,i+1}$ for $i = 2, 3, \ldots , N-1$.

Next, the allocation unit 102 specify the chain to which the Ising variable $\sigma_{i-m,i+1+m}$ (where $i-m < i+1+m$) is allocated. The chain kind is equal for any $m$. When $m = 0$, that is, for the Ising variable $\sigma_{i,i+1}$, the chain kind and coordinates are determined by the rules described above. For other $m$, every time $m$ is incremented by one, the unit to which the Ising variable is allocated moves to the lower-left adjacent unit in the unit row. When the chain to which the Ising variable ($\sigma_{i-m,i+1+m}$ is allocated is $c[c_m]$ $(w_m, k_m, z_m)$, the chain $c[c_{m+1}](w_{m+1}, k_{m+1}, z_{m+1})$ to which the Ising variable $\sigma_{i-m+1,i+m}$ is allocated is as follows.

$$c_{m+1} = c_m \qquad \text{Equation (16)}$$

$$w_{m+1} = w_m - 1 \qquad \text{Equation (17)}$$

$$k_{m+1} = k_m \qquad \text{Equation (18)}$$

$$z_{m+1} = z_m + 1 \qquad \text{Equation (19)}$$

In accordance with these rules, the allocation unit 102 can sequentially allocate $\sigma_{i-m,i+1+m}$. Consequently, one Ising variable $\sigma$ in every plaquette is allocated.

The allocation unit 102, using the Ising variable $\sigma$ allocated as described above, can also specify the chains to which the remaining Ising variables $\sigma$ and the Ising variables $\tau$ are allocated. From the chain to which the Ising variable $\sigma$ belonging to the same plaquette is allocated, the chain to which the other Ising variable $\sigma$ and the Ising variable $\tau$ are allocated is uniquely determined. Specifically, using the subscript of the Ising variable $\sigma_{i-m+1,i+m}$ allocated to the chain $c[c_m]$ $(w_m, k_m, z_m)$, the Ising variable $\sigma_{i-m+1,i+m+1}$ is allocated to the chain $c[c_m]$ $(w_m, k_m-2, z_m+1)$. The Ising variable $\tau_{i-m+1,i+m}$ is allocated to the chain $c[1-c_m]$ $(w_m+1-c_m, 3-k_m, z_m+c_m)$. The Ising variable $\tau_{i-m,i+m}$ is allocated to the chain $c[1-c_m]$ $(w_m-c_m, 5-k_m, z_m+c_m)$. By the above processing, all the Ising variables $\sigma$ and $\tau$ are allocated to chains.

After the above allocation, the allocation of the variable $\tau$ is changed to an allocation to a single node. This is because, as described above, the variable $\tau$ can represent the product involving the variable $\tau$ appearing in the cost function by using only one of the two nodes belonging to each chain. In the case where the node does not correspond to a defective bit, the node to which the variable $\tau$ is allocated is the node with $u = 0$ among the two nodes of each of the above chains. By allocating the variable $\tau$ to one node of the chain of length 2, the other node of that chain is not used for allocation. Therefore, the number of nodes used for allocation is reduced. Furthermore, this feature is advantageous when there are defective nodes in the Zephyr graph used.

It is considered that the nodes of the Zephyr graph correspond to quantum bits, however, in the actual quantum bit network, there may be quantum bits that are not functioning properly. Such non-functioning quantum bits are referred to as defective bits. Nodes corresponding to defective bits cannot be used for allocation. The above-described characteristic regarding the variable $\tau$ enables allocation to be performed while avoiding defective bits. For example, in the case where the node to which the variable $\tau$ is to be allocated through the above process corresponds to a defective bit, a proper allocation can be performed by allocating the variable $\tau$ to the other node of the chain, thereby avoiding the defective bit. For instance, as shown in FIG. 18, the variable $\tau$ may be allocated to the node 981m instead of the node 981a. In this case, the variable $\tau$ is allocated to the node of the chain with u = 1. Not only in such cases, but also in the case where the node used for allocating the variable $\sigma$ corresponds to a defective bit, the allocation can be changed as described below to avoid using that node.

First, attention is given to the four nodes with coordinates (u = 0, w, k, j, z) where k = 0, 1, 2, and 3. These nodes are the nodes 981a, 981b, 981c, and 981d in FIG. 18. Among these nodes, it is assumed that the two nodes with k = 0 and 2 are used for the allocation of two variables $\sigma$, and the two nodes with k = 1 and 3 are used for the allocation of two variables $\tau$. However, in cases such as allocating variables located at the ends of the plaquette sequence, some of the four nodes may not be used for allocation. First, consider the case in which node 981a corresponds to a defective bit. In this case, the allocation of the variable $\tau$ that is allocated to node 981b is changed to the other node of the original chain of length 2, that is, to the node with u = 1. This node is the node 981h in FIG. 18. When node 981h cannot be used for reasons such as corresponding to another defective bit, then the allocation of the variable $\tau$ that is allocated to node 981d is changed to the node with u = 1 of the original chain of length 2. This node is the node 981l in FIG. 15. When this change is also not possible, then the allocation cannot be altered. However, when either of the allocations of the variable $\tau$ to node 981b or node 981c can be changed, then it becomes possible to avoid the defective bit in node 981a and allocate the variable $\sigma$ to node 981b or node 981d. This variable $\sigma$ was originally allocated to the chain consisting of another node 981q and edge 982b, but by this change, it is allocated to either the chain consisting of nodes 981b and 981q and edge 982a, or the chain consisting of nodes 981d and 981q and edge 982c.

The reason why the new allocation obtained through this change is an appropriate allocation is as follows. The four nodes with k = 0, 1, 2, and 3 have the same nodes connected by internal edges. For example, in FIG. 18, the nodes 981a, 981b, 981c, and 981d are connected by internal edges to the same nodes, which are all of nodes 981e, 981f, 981g, 981h, 981l, 981j, 981k, 981l, 981m, 981n, 981o, 981p, 981q, 981r, 981s, and 981t. The above-described allocation represents all products between variables in the cost function of Equation (9) using only internal edges. Therefore, when two nodes are considered and all the nodes connected by internal edges to one of the nodes are the same as all the nodes connected by internal edges to the other node, then allocating any variable to either of those two nodes enables the same cost function to be represented. Accordingly, even in the case where the node with k = 2, that is, node 981c, corresponds to a defective bit, when either of the allocations of the variable $\tau$ to node 981b or node 981d can be changed by the same process, the allocation avoiding the defective bit can be performed. Moreover, when the two nodes 981b and 981d are used for the allocation of two variables $\sigma$ and either of them corresponds to a defective bit, then the defective bit can also be avoided by changing the allocation through the same process.

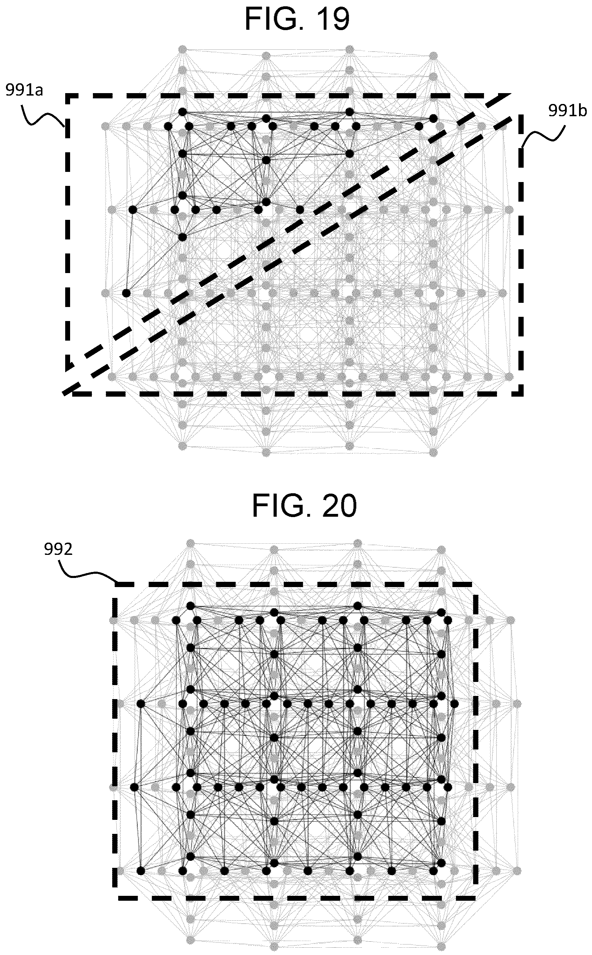

The method of determining the variable $r_i$ for the allocation of adjacent plaquette columns will be explained. Here, defective bits are not considered. First, consider the case where the values of all $r_i$ (i = 1, 2, ..., N-2) are set to 0. In this case, as shown in FIG. 19, the nodes used for allocation are included in the upper left region 991a of the entire Zephyr graph, and the remaining regions are not used. In particular, region 991b is not used. Then, the maximum value of N that can be appropriately allocated to a Zephyr graph of size m is 2m + 1. In order to allocate variables of a problem with a larger N, the values of $r_i$ are adjusted so that the nodes in region 991b are also used. For that purpose, the values of $r_i$ (i = 1, 2, ..., N-2) are determined as follows.

[Math. 7]

$$r_i = \begin{cases} 0 & (i = 1, 2, ..., 2m-1), \\ 2 & (i = 2m, 2m+1, ..., N-2) \end{cases} \qquad \text{Equation (20)}$$

As a result, as shown in FIG 20, the utilized area expands, allowing use of the nodes in region 992. In this case the maximum N that can be properly allocated on a graph of size m is 4m.

As described above, when the allocation unit 102 specifies the above $c_1$, $w_1$, $z_1$, and $r_i$ for i = 1, 2, ..., N-2, all Ising variables are sequentially allocated to chains on the Zephyr graph. The length of the chain corresponding to the variable $\sigma$ is 2, and the length of the chain corresponding to the variable $\tau$ is 1. In addition, when defective bits exist, it is sometimes possible to avoid them by the above processing. In particular, when the values of $r_i$ are determined based on Equation (20), the nodes of the Zephyr graph can be used efficiently for allocation.

[Operation Explanation]

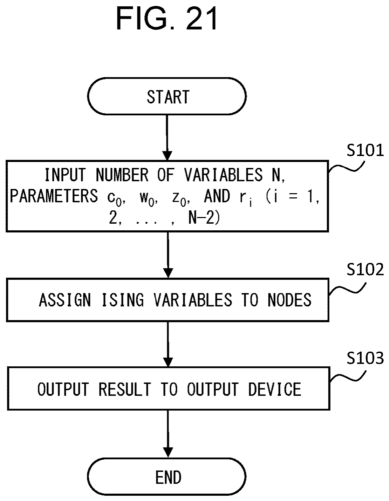

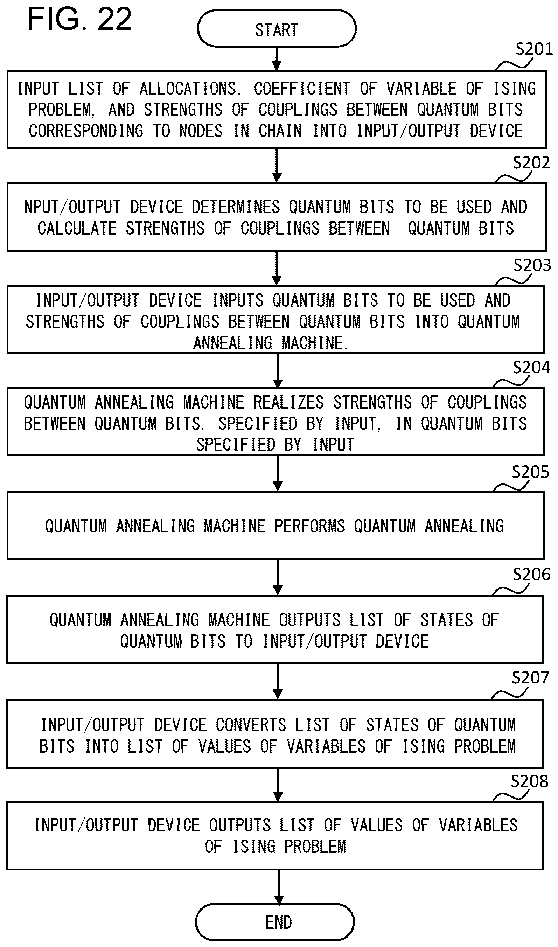

Next, the operation of the present example embodiment will be explained with reference to the drawings. FIG.21 is a flowchart showing an operation flow of the allocation device 100. FIG.22 is a flowchart showing an operation flow of calculating the Ising problem by the computing system 10.

With reference to FIG.21, the operation flow of the allocation device 100 is explained.

First, the input acceptance unit 101 of the allocation device 100 receives, through an unillustrated input device, the number N of binary variables (Ising variables) of the Ising problem and the information related to one Ising variable $\sigma_{1,2}$ allocated to nodes, namely $c_1$, $w_1$, $z_1$, and $r_i$ (i = 1, 2, ... , N-2) (step S101).

Next, the allocation unit 102 of the allocation device 100 represents the input Ising problem having the number of Ising variables as an Ising problem in the form of Equation (9) previously stored, and allocates the Ising variables $\sigma$ and the Ising variables $\tau$ to nodes on the Zephyr graph (step S102). At this time, only the information indicating which variables and which variables appear in the form of a product in Equation (9) is required, and the specific values of the coefficients of those products in Equation (9) are not necessary. The allocation unit 102 performs the allocation as described above in accordance with the values of N, $c_1$, $w_1$, $z_1$, and $r_i$ (i = 1, 2, ... , N-2).

Next, the output unit 103 of the allocation device 100 outputs information indicating the correspondence between the binary variables and the nodes, based on the allocation result of the allocation unit 102 (step S103). This output may be performed, for example, to an output device (not shown) such as a display, or may be an output in the form of an electronic file.

Next, the flow of the calculation operation of the Ising problem by the computing system 10 will be explained. When solving the Ising problem using the quantum annealing machine 200, the operation flow follows the flow shown in the flowchart of FIG. 22.

First, the output of the allocation device 100 (allocation list) and the output of the calculation device 300 (coefficients of the Ising variables) are input to the input/output device 400 (step S201). In step S201 a user also specify the coupling strength between quantum bits corresponding to edges that connect nodes inside each chain (chain strength) and input that value to the input/output device 400. The same chain strength is used for every chain.

Next, the input/output device 400 determines the quantum bits to be used in the quantum annealing machine 200 using the allocation list, the coefficients of the Ising variables, and the chain strength, and calculates the coupling strength between the quantum bits (step S202). The quantum annealing machine 200 can easily perform the calculation when the above three inputs are provided. The coupling strength between the quantum bits calculated here includes the coupling strength corresponding to the edges within the chains. All of the coupling strengths are equal to the designated chain strength.

Next, the input/output device 400 inputs the list of target quantum bits to be used and the coupling strength between the quantum bits into the quantum annealing machine 200 (step S203).

Next, the quantum annealing machine 200 implements the coupling strength between the quantum bits, as specified by the input, among the quantum bits specified by the input (step S204).

Next, the quantum annealing machine 200 executes quantum annealing (step S205). Specifically, the states of the quantum bits within the quantum annealing machine 200 transition from an initial state to a state that minimizes the total energy of the quantum bits. Each quantum bit can generally take two states, but ultimately it will settle into one of the two states.

Then, a list of states of the quantum bits at that time is output from the quantum annealing machine 200 to the input/output device 400 (step S206).

Next, the input/output device 400 converts the list of states of the quantum bits into a list of values of the Ising variables (step S207). The result of the conversion may be, for example, $\sigma_{1,2} = 0$, $\sigma_{1,3} = 2$, ... , and so on.

The input/output device 400 outputs this list (step S208). This output may be directed, for example, to an output device (not shown), such as a display, or it may be output as an electronic file.

[Effect Explanation]

In the present example embodiment, the allocation device 100 allocates the variables of an Ising problem, which is represented by a cost function based on the LHZ method, to the nodes on a Zephyr graph. As described above, according to the allocation of the present example embodiment, by devising the arrangement of chains on the Zephyr graph, chains with a smaller number of nodes are constructed. As a result, the total number of nodes used can be reduced. Furthermore, the allocation device 100 is capable of realizing an allocation in which there is no bias in the number of nodes included in each chain to which the variable $\sigma$ and the variable $\tau$ are allocated, respectively. It should be noted that, in the present example embodiment, regardless of the number N of variables in the Ising problem, the length of the chain to which the variable $\sigma$ is allocated is 2, and the length of the chain to which the variable $\tau$ is allocated is 1.

Because the length of the chain allocated to each variable $\tau$ is 1, nodes that are not used for allocation remain even inside units used for allocation. By using this feature, when actual quantum bits include defective bits, it is possible to avoid nodes related to the defective bits. Focus on the four nodes having coordinates (u = 0, w, k, j, z) with k = 0, 1, 2, 3. Assume that the two nodes with k = $k_1$ and $k_2$ are used for two variables $\sigma$ and the two nodes with k = $k_3$ and $k_4$ are used for

two variables $\tau$. First, consider the case where $k_1$ corresponds to a defective bit. In this case the variable $\tau$ allocated to $k_3$ is moved to the other node of its original chain, that is, the node with u = 1. When this node with u = 1 cannot be used, that is, it also corresponds to a defective bit, the variable $\tau$ allocated to $k_4$ is moved to the node with u = 1 of its chain. When neither change is possible the allocation fails, but when either $\tau$ allocation on $k_3$ or $k_4$ can be modified, the defective bit at $k_1$ can be avoided and the variable $\sigma$ can be allocated to $k_3$ or $k_4$. When $k_2$ corresponds to a defective bit, the same processing can avoid the defective bit by changing one $\tau$ allocation on $k_3$ or $k_4$.

There are three methods for allocating adjacent plaquette rows. When every $r_i$ (i = 1, 2, ... , N-2) is fixed to 0, the maximum N that can be properly allocated on a Zephyr graph of size m is equal to or less than 2m + 1. However, when the values of $r_i$ (i = 1, 2, ... , N-2) are determined as in Equation (20), the nodes of the entire Zephyr graph can be used efficiently, and the maximum N that can be properly allocated on a Zephyr graph of size m is equal to or more than 4m.

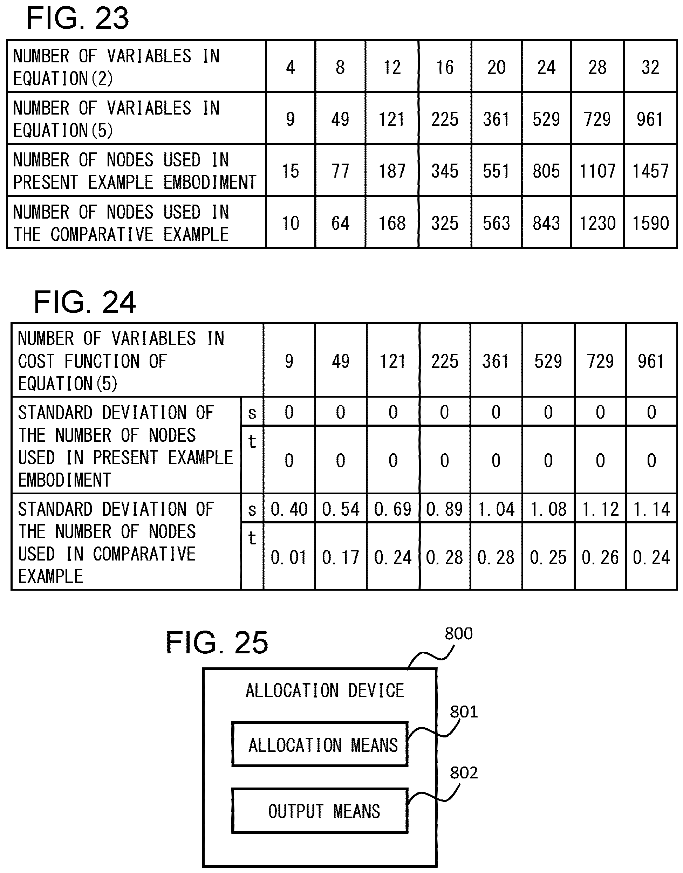

Next, assume the cost function of Equation (9) is given and compare the allocation of the present example embodiment with the allocation based on the method described in Non patent literature 2. Defective bits are not considered, and $r_i$ (i = 1, 2, ... , N-2) is set as in Equation (20) for the present example embodiment. FIG.23 shows a table that compares experimental results obtained with the method of Non patent literature 2 and the results of the present example embodiment. In this example the number N of variables in Equation (2) is 4, 8, 12, 16, 20, 24, 28, 32. These correspond to 9, 49, 121, 225, 361, 529, 729, 961 variables in Equation (9) actually allocated to nodes. In the allocation based on the allocation method described in Non patent literature 2, the allocation differs for each trial. Therefore, 100 trials of the allocation based on the allocation method described in Non patent literature 2 were conducted. The minimum number of used nodes among those 100 trials is shown in the table of FIG. 23. The number of nodes used in the present example embodiment is also shown in the table. In the case of $N \leq 16$, the allocation method of Non patent literature 2 uses fewer nodes. However, in the case of $N \geq 20$, the allocation of the present embodiment uses fewer nodes. Furthermore, the larger the value of N in the case of $N \geq 20$, the greater the difference in the number of used nodes between the allocation of the present example embodiment and the allocation of Non patent literature 2.

In each trial, the standard deviation among the chains (among the variables) of the number of nodes included in each chain was calculated. Then, the average value of the standard deviation over 100 trials was calculated. The calculation results are shown in the table of FIG. 24. The standard deviation among the chains of the number of nodes included in each chain in the present embodiment is 0, and this is also shown in the table. The average value, over 100 trials, of the standard deviation of the number of nodes included in the chains based on the allocation method described in Non patent literature 2 differs between $\sigma$ and $\tau$, and also differs depending on N. In every case, there is a bias in the number of nodes included in the chains. In the allocation according to the present embodiment, the number of nodes is 2 in all chains for $\sigma$, and the number of nodes is 1 in all chains for $\tau$, so there is no bias in the number of nodes. Therefore, the allocation of the present example embodiment can realize an allocation without bias in the number of nodes included in the chains.

Next, an overview of the present invention is explained. FIG 25 is a block diagram showing a principal portion of an allocation device according to the present invention. An allocation device 800 includes allocation means 801 (in the example embodiment, realized by the allocation unit 102) for allocating binary variables of an Ising problem, which represents a cost function of an LHZ method, to nodes on a Zephyr graph according to the number of the binary variables and parameters for determining allocation of the binary variables, and output means 802 (in the example embodiment, realized by the output unit 103) for outputting information indicating correspondence between the binary variables and the nodes, based on a result of the allocation of the binary variables to the nodes, wherein the allocation means 801 reflects a periodic structure that represents the relationship between pairs of the binary variables that are products in the cost function of the Ising problem to a periodic structure in the nodes and edges on the Zephyr graph, avoids part of defective nodes among the nodes, reflects a size of the Zephyr graph, to allocate the binary variables to the nodes.

Parts or all of the above example embodiment can also be described as the following Supplementary Note, but are not limited thereto.

(Supplementary Note 1)

An allocation device comprising:

allocation means for allocating binary variables of an Ising problem, which represents a cost function of an LHZ method, to nodes on a Zephyr graph according to the number of the binary variables and parameters for determining allocation of the binary variables; and
output means for outputting information indicating correspondence between the binary variables and the nodes, based on a result of the allocation of the binary variables to the nodes,
wherein the allocation means reflects a periodic structure that represents the relationship between pairs of the binary variables that are products in the cost function of the Ising problem to a periodic structure in the nodes and edges on the Zephyr graph, avoids part of defective nodes among the nodes, reflects a size of the Zephyr graph, to allocate the binary variables to the nodes.

(Supplementary Note 2)

The allocation device according to Supplementary Note 1, further comprising
input acceptance means for accepting input of the number of the binary variables and the parameters.

(Supplementary Note 3)

The allocation device according to Supplementary Note 1 or 2, wherein

four nodes constituting the Zephyr graph form a tile,
coordinates of the node consist of a value u representing an arbitrary direction in which the nodes align, a tile number w for a direction in which the node align, a node number k in the tile, a number j indicating whether the tile number for a perpendicular direction to the direction in which the node align is even or odd, and an integer part z obtained by dividing the tile number for the perpendicular direction to the direction in which the node align by two, and
the parameters are defined by a set of values (u, w, k, j, z) representing the coordinates of the node.

(Supplementary Note 4)

The allocation device according to Supplementary Note 3, wherein
the cost function is expressed in Equation (9), the binary variables in the Ising problem are $\sigma$ and $\tau$ in the Equation (9), $J_{ij}$ in the Equation (9) is a value in row i, column j of a matrix J, where both i and j take values 1, 2, ... , N-1, and C in the Equation (9) is a parameter to be adjusted in the range of positive values.

(Supplementary Note 5)

The allocation device according to Supplementary Note 3 or 4, wherein

the allocation means uses, as a set of the nodes, two types of chains A and B consisting of two nodes, when allocating the binary variables of the cost function of the Ising problem to the nodes,
represents a position of the chain by a triplet (w, k, z') consisting of the coordinates on the Zephyr graph of the two nodes constituting the chain,
represents the type and the position of the chain together as chain A (w, k, z') and chain B (w, k, z'),
represents a remainder obtained when an integer a is divided by an integer b as a%b, and represents an integer part obtained when the integer a is divided by the integer b as a//b,
the chain A (w, k, z') is composed of the node specified by the coordinates (0, w, k, z' % 2, z' // 2), the node specified by the coordinates (1, z', k, w % 2, w // 2), and an edge between the two nodes, and
the chain B (w, k, z') is composed of the node specified by the coordinates (0, w, k, z' % 2, z' // 2), the node specified by the coordinates (1, z' + 1, k, (w - 1) % 2, (w - 1) // 2), and an edge between the two nodes.

(Supplementary Note 6)

The allocation device according to Supplementary Note 5, wherein
the allocation means allocates $\tau$, among the binary variables, by using only one node of the two nodes constituting chain A (w, k, z') or chain B (w, k, z') on the Zephyr graph, thereby performing the allocation even when one of the two nodes is defective.

(Supplementary Note 7)

The allocation device according to Supplementary Note 6, wherein

the allocation means uses, among the four nodes specified by the coordinates (0, w, k, j, z) with k = 0, 1, 2, 3, a first node and a second node for allocation of two of the $\sigma$, and a third node and a fourth node for allocation of two of the $\tau$, and
when the first node or the second node is defective, changes the allocation of the $\tau$ allocated to the third node to allocation to a fifth node, which is a node different from the third node and included in the chain including the third node, and
when the fifth node is defective, changes the allocation of the $\tau$ allocated to the fourth node to allocation to a sixth node, which is a node different from the fourth node and included in the chain including the fourth node.

(Supplementary Note 8)

The allocation device according to Supplementary Note 3, 4 or 7, wherein

by a pair (w, z') consisting of values relating to the coordinates on the Zephyr graph, a set of eight nodes whose coordinates are (0, w, 2, z'%2, z'//2), (0, w, 3, z'%2, z'//2), (0, w+1, 0, z'%2, z'//2), (0, w+1, 1, z'%2, z'//2), (1, z', 2, w%2, w//2), (1, z', 3, w%2, w//2), (1, z'+1, 0, w%2, w//2) and (1, z', 1, w%2, w//2) is called a unit specified by the pair (w, z'),
a set of the units whose sum of w and z' is equal is called a unit row specified by the sum,
the unit rows are numbered in ascending order of the sum that specifies the unit row,
after the binary variables are allocated to the nodes of the i-th unit row, allocation to the nodes of the (i+1)-th unit row is performed according to three types of values of a parameter $r_i$, and
the parameter $r_i$ is used for i = 1, 2, ..., N-2.

(Supplementary Note 9)

The allocation device according to Supplementary Note 8, wherein

the allocation means uses a function c[a] which specifies the chain A when an integer a is 0, and the chain B when the integer a is 1,
allocates ($\sigma_{1,2}$, which is one of the binary variables, to the chain specified by the type of the chain c[$c_1$] and the coordinates ($w_1$, 3-$c_1$, $z_1$) of the chain on the Zephyr graph,
expresses the chain as chain c[$c_1$]($w_1$, 3-$c_1$, $z_1$),
allocates $\sigma_{i,i+1}$ to chain c[$c_i$]($w_i$, $k_i$, $z_i$), and
defines the number of the unit row including the chain c[$c_i$]($w_i$, $k_i$, $z_i$) as i, and when allocating the binary variable $\sigma_{i+1,i+2}$ to the chain included in the unit row i+1 according to the parameter $r_i$, determines the type $c_{i+1}$ of the chain to which the binary variable $\sigma_{i+1, i+2}$ is allocated, and the coordinates ($w_{i+1}$, $k_{i+1}$, $z_{i+1}$) of the chain respectively by the following Equations (B), (C), (D), and (E),
the allocation means, when allocating the binary variable $\sigma_{i-m, i+1+m}$, which is determined by an integer i and an integer m satisfying i-m < i+1+m, to the chain c[$c_m$]($w_m$, $k_m$, $z_m$), allocates the binary variable $\sigma_{i-m+1, i+m}$ to the chain c[$c_{m+1}$] ($w_{m+1}$, $k_{m+1}$, $z_{m+1}$) determined by the following Equations (F), (G), (H), and (I), and
the allocation means uses the subscripts of the binary variable $\sigma_{i-m+1, i+m}$ to allocate the binary variable $\sigma_{i-m+1, i+m+1}$ to the chain c[$c_m$]($w_m$, $k_m$-2, $z_m$+1), allocates the binary variable $\tau_{i-m+1, i+m}$ to the chain c[1-$c_m$]($w_m$+1-$c_m$, 3-$k_m$, $z_m$+$c_m$),
and allocates the binary variable $\tau_{i-m, i+m}$ to the chain c[1-$c_m$]($w_m$-$c_m$, 5-$k_m$, $z_m$+$c_m$).

$$c_{i+1} = c_i + r_i(r_i\text{-}2)(2c_i\text{-}1) \qquad \text{Equation (B)}$$

$$w_{i+1} = w_i + 1 - r_i(r_i\text{-}1)/2 + r_i(r_i\text{ -}2)c_i \qquad \text{Equation (C)}$$

$$k_{i+1} = (r_i\text{ -}1)(r_i\text{ -}1)k_i - r_i (r_i\text{ -}2)(5\text{-}k_i) \qquad \text{Equation (D)}$$

$$z_{i+1} = z_i + r_i (r_i\text{ -}1)/2 - r_i (r_i\text{ -}2)c_i \qquad \text{Equation (E)}$$

$$c_{m+1} = c_m \qquad \text{Equation (F)}$$

$$w_{m+1} = w_m - 1 \qquad \text{Equation (G)}$$

$$k_{m+1} = k_m \qquad \text{Equation (H)}$$

$$z_{m+1} = z_m + 1 \qquad \text{Equation (I)}$$

(Supplementary Note 10)

The allocation device according to Supplementary Note 9, wherein
the allocation means determines the parameters $r_i$ for i = 1, 2, ... , N-2 in accordance with Equation (20), based on a value m determining a number of the nodes of the Zephyr graph.

(Supplementary Note 11)

An allocation method comprising:

allocating binary variables of an Ising problem, which represents a cost function of an LHZ method, to nodes on a Zephyr graph according to the number of the binary variables and parameters for determining allocation of the binary variables;
outputting information indicating correspondence between the binary variables and the nodes, based on a result of the allocation of the binary variables to the nodes; and
reflecting a periodic structure that represents the relationship between pairs of the binary variables that are products in the cost function of the Ising problem to a periodic structure in the nodes and edges on the Zephyr graph, to allocate the binary variables to the nodes.

(Supplementary Note 12)

A computer-readable recording medium storing an allocation program, wherein
the allocation program causes a computer to execute:

a process of allocating binary variables of an Ising problem, which represents a cost function of an LHZ method, to nodes on a Zephyr graph according to the number of the binary variables and parameters for determining allocation of the binary variables; and
a process of outputting information indicating correspondence between the binary variables and the nodes, based on a result of the allocation of the binary variables to the nodes,
wherein, in the allocation process, the allocation program causes the computer to execute reflecting a periodic structure that represents the relationship between pairs of the binary variables that are products in the cost function of the Ising problem to a periodic structure in the nodes and edges on the Zephyr graph, to allocate the binary variables to the nodes.

(Supplementary Note 13)

The recording medium according to Supplementary Note 12, wherein
the allocation program causes a computer to execute a process of accepting input of the number of the binary variables and the parameters.

While the present disclosure has been particularly shown and described with reference to example embodiments thereof, the present disclosure is not limited to these example embodiments. It will be understood by those of ordinary skill in the art that various changes in form and details may be made therein without departing from the spirit and scope of the present disclosure as defined by the claims.

Reference Signs List

| | |
|---|---|
| 100 | allocation device |
| 101 | input acceptance unit |
| 102 | allocation unit |
| 103 | output unit |
| 150 | network interface |
| 151 | memory |
| 152 | processor |
| 200 | quantum annealing machine |
| 300 | calculation device |
| 400 | input/output device |

800 allocation device
801 allocation means
802 output means

**Claims**

1. An allocation device comprising:

   allocation means for allocating binary variables of an Ising problem, which represents a cost function of an LHZ method, to nodes on a Zephyr graph according to the number of the binary variables and parameters for determining allocation of the binary variables; and
   output means for outputting information indicating correspondence between the binary variables and the nodes, based on a result of the allocation of the binary variables to the nodes,
   wherein the allocation means reflects a periodic structure that represents the relationship between pairs of the binary variables that are products in the cost function of the Ising problem to a periodic structure in the nodes and edges on the Zephyr graph, avoids part of defective nodes among the nodes, reflects a size of the Zephyr graph, to allocate the binary variables to the nodes.

2. The allocation device according to claim 1, further comprising
   input acceptance means for accepting input of the number of the binary variables and the parameters.

3. The allocation device according to claim 1 or 2, wherein

   four nodes constituting the Zephyr graph form a tile,
   coordinates of the node consist of a value u representing an arbitrary direction in which the nodes align, a tile number w for a direction in which the node align, a node number k in the tile, a number j indicating whether the tile number for a perpendicular direction to the direction in which the node align is even or odd, and an integer part z obtained by dividing the tile number for the perpendicular direction to the direction in which the node align by two, and
   the parameters are defined by a set of values (u, w, k, j, z) representing the coordinates of the node.

4. The allocation device according to claim 3, wherein
   the cost function is expressed in Equation (A) below, the binary variables in the Ising problem are $\sigma$ and $\tau$ in the Equation (A), $J_{ij}$ in the Equation (A) is a value in row i, column j of a matrix J, where both i and j take values 1, 2, ... , N-1, and C in the Equation (A) is a parameter to be adjusted in the range of positive values.
   [Math. 8]

$$H = -\sum_{i,j} J_{ij}\sigma_{ij} - C\sum_{i,j}\left[-2\tau_{ij}\left(\sigma_{ij} + \sigma_{ij+1} + \sigma_{i+1,j} + \sigma_{i+1,j+1}\right) + \sigma_{i,j}\sigma_{i,j+1} + \sigma_{i,j}\sigma_{i+1,j} + \sigma_{i,j}\sigma_{i+1,j+1} + \sigma_{i,j+1}\sigma_{i+1,j} + \sigma_{i,j+1}\sigma_{i+1,j+1} + \sigma_{i+1,j}\sigma_{i+1,j+1}\right] \quad \text{Equation (A)}$$

5. The allocation device according to claim 3, wherein

   the allocation means uses, as a set of the nodes, two types of chains A and B consisting of two nodes, when allocating the binary variables of the cost function of the Ising problem to the nodes, and
   wherein
   a position of the chain is represented by a triplet (w, k, z') consisting of the coordinates on the Zephyr graph of the two nodes constituting the chain,
   the type and the position of the chain are represented together as chain A (w, k, z') and chain B (w, k, z'),
   a remainder obtained when an integer a is divided by an integer b is represented as a%b, and an integer part obtained when the integer a is divided by the integer b is represented as a//b,
   the chain A (w, k, z') is composed of the node specified by the coordinates (0, w, k, z' % 2, z' // 2), the node specified by the coordinates (1, z', k, w % 2, w // 2), and an edge between the two nodes, and
   the chain B (w, k, z') is composed of the node specified by the coordinates (0, w, k, z' % 2, z' // 2), the node specified by the coordinates (1, z' + 1, k, (w - 1) % 2, (w - 1) // 2), and an edge between the two nodes.

6. The allocation device according to claim 5, wherein

the allocation means allocates $\tau$, among the binary variables, by using only one node of the two nodes constituting chain A (w, k, z') or chain B (w, k, z') on the Zephyr graph, thereby performing the allocation even when one of the two nodes is defective.

7. The allocation device according to claim 6, wherein

the allocation means
uses, among the four nodes specified by the coordinates (0, w, k, j, z) with k = 0, 1, 2, 3, a first node and a second node for allocation of two of the $\sigma$, and a third node and a fourth node for allocation of two of the $\tau$, and
when the first node or the second node is defective, changes the allocation of the $\tau$ allocated to the third node to allocation to a fifth node, which is a node different from the third node and included in the chain including the third node, and
when the fifth node is defective, changes the allocation of the $\tau$ allocated to the fourth node to allocation to a sixth node, which is a node different from the fourth node and included in the chain including the fourth node.

8. The allocation device according to claim 3, wherein

by a pair (w, z') consisting of values relating to the coordinates on the Zephyr graph, a set of eight nodes whose coordinates are (0, w, 2, z'%2, z'//2), (0, w, 3, z'%2, z'//2), (0, w+1, 0, z'%2, z'//2), (0, w+1, 1, z'%2, z'//2), (1, z', 2, w%2, w//2), (1, z', 3, w%2, w//2), (1, z'+1, 0, w%2, w//2) and (1, z', 1, w%2, w//2) is called a unit specified by the pair (w, z'),
a set of the units whose sum of w and z' is equal is called a unit row specified by the sum,
the unit rows are numbered in ascending order of the sum that specifies the unit row,
after the binary variables are allocated to the nodes of the i-th unit row, allocation to the nodes of the (i+1)-th unit row is performed according to three types of values of a parameter $r_i$, and
the parameter $r_i$ is used for i = 1, 2, ..., N-2.

9. The allocation device according to claim 8, wherein

the allocation means uses
a function c[a] which specifies the chain A when an integer a is 0, and the chain B when the integer a is 1,
allocates $\sigma_{1,2}$, which is one of the binary variables, to the chain specified by the type of the chain $c[c_1]$ and the coordinates $(w_1, 3-c_1, z_1)$ of the chain on the Zephyr graph,
expresses the chain as chain $c[c_1](w_1, 3-c_1, z_1)$,
allocates $\sigma_{i,i+1}$ to chain $c[c_i](w_i, k_i, z_i)$, and
defines the number of the unit row including the chain $c[c_i](w_i, k_i, z_i)$ as i, and when allocating the binary variable $\sigma_{i+1,i+2}$ to the chain included in the unit row i+1 according to the parameter $r_i$, determines the type $c_{i+1}$ of the chain to which the binary variable $\sigma_{i+1,i+2}$ is allocated, and the coordinates $(w_{i+1}, k_{i+1}, z_{i+1})$ of the chain respectively by the following Equations (B), (C), (D), and (E),
when allocating the binary variable $\sigma_{i-m,i+1+m}$, which is determined by an integer i and an integer m satisfying i-m < i+1+m, to the chain $c[c_m](w_m, k_m, z_m)$, allocates the binary variable $\sigma_{i-m+1,i+m}$ to the chain $c[c_{m+1}](w_{m+1}, k_{m+1}, z_{m+1})$, which is determined by the following Equations (F), (G), (H), and (I), and
uses the subscripts of the binary variable $\sigma_{i-m+1,i+m}$ to allocate the binary variable $\sigma_{i-m+1,i+m+1}$ to the chain $c[c_m]$ $(w_m, k_m-2, z_m+1)$, allocates the binary variable $\tau_{i-m+1,i+m}$ to the chain $c[1-c_m](w_m+1-c_m, 3-k_m, z_m+c_m)$, and allocates the binary variable $\tau_{i-m,i+m}$ to the chain $c[1-c_m](w_m-c_m, 5-k_m, z_m+c_m)$.

$$c_{i+1} = c_i + r_i(r_i-2)(2c_i-1) \qquad \text{Equation (B)}$$

$$w_{i+1} = w_i + 1 - r_i(r_i-1)/2 + r_i(r_i-2)c_i \qquad \text{Equation (C)}$$

$$k_{i+1} = (r_i-1)(r_i-1)k_i - r_i(r_i-2)(5-k_i) \qquad \text{Equation (D)}$$

$$z_{i+1} = z_i + r_i(r_i-1)/2 - r_i(r_i-2)c_i \qquad \text{Equation (E)}$$

$$c_{m+1} = c_m \qquad \text{Equation (F)}$$

$$w_{m+1} = w_m - 1 \qquad \text{Equation (G)}$$

$$k_{m+1} = k_m \qquad \text{Equation (H)}$$

$$z_{m+1} = z_m + 1 \qquad \text{Equation (I)}$$

10. The allocation device according to claim 9, wherein
the allocation means determines the parameters $r_i$ for i = 1, 2, ... , N-2 in accordance with Equation (J) below, based on a value m determining a number of the nodes of the Zephyr graph.
[Math. 9]

$$r_i = \begin{cases} 0 & (i = 1, 2, \ldots, 2m-1), \\ 2 & (i = 2m, 2m+1, \ldots, N-2) \end{cases} \qquad \text{Equation (J)}$$

11. An allocation method comprising:

allocating binary variables of an Ising problem, which represents a cost function of an LHZ method, to nodes on a Zephyr graph according to the number of the binary variables and parameters for determining allocation of the binary variables;
outputting information indicating correspondence between the binary variables and the nodes, based on a result of the allocation of the binary variables to the nodes; and
reflecting a periodic structure that represents the relationship between pairs of the binary variables that are products in the cost function of the Ising problem to a periodic structure in the nodes and edges on the Zephyr graph, to allocate the binary variables to the nodes.

12. A computer-readable recording medium storing an allocation program, wherein
the allocation program causes a computer to execute:

a process of allocating binary variables of an Ising problem, which represents a cost function of an LHZ method, to nodes on a Zephyr graph according to the number of the binary variables and parameters for determining allocation of the binary variables; and
a process of outputting information indicating correspondence between the binary variables and the nodes, based on a result of the allocation of the binary variables to the nodes,
wherein, in the allocation process, the allocation program causes the computer to execute reflecting a periodic structure that represents the relationship between pairs of the binary variables that are products in the cost function of the Ising problem to a periodic structure in the nodes and edges on the Zephyr graph, to allocate the binary variables to the nodes.

13. The recording medium according to claim 12, wherein
the allocation program causes a computer to execute a process of accepting input of the number of the binary variables and the parameters.

FIG. 1

FIG. 2

# FIG. 3

# FIG. 4

# FIG. 5

## FIG. 6

931a

931b

931c

931d

## FIG. 7

932a    932b    932c    932d

# FIG. 8

# FIG. 9

# FIG. 10

# FIG. 11

# FIG. 12

## FIG. 13

## FIG. 14

# FIG. 15

NUMBER N OF ISING VARIABLES
IN EQUATION(2),
PARAMETERS $c_0$, w, $z_0$,
$r_i$ (i = 1, 2, ... , N–2)

$J_{ij}$ AND C IN EQUATION (2)

10

100

| ALLOCATION DEVICE |

300

| CALCULATION DEVICE |

LIST OF ALLOCATIONS OF
VARIABLES OF PROBLEM TO
NODES OF ZEPHYR GRAPH

COEFFICIENTS OF VARIABLES
OF ISING PROBLEM

400

LIST OF SOLUTIONS OF
THE ISING PROBLEM

| INPUT/OUTPUT DEVICE |

LIST OF QUANTUM BITS TO BE USED
AND STRENGTHS OF COUPLINGS
BETWEEN THE QUANTUM BITS

LIST OF FINAL STATES
OF THE QUANTUM BITS

200

| QUANTUM ANNEALING MACHINE |

# FIG. 16

100

| ALLOCATION DEVICE |

101
| INPUT ACCEPTANCE UNIT |

102
| ALLOCATION UNIT |

103
| OUTPUT UNIT |

FIG. 17

100

ALLOCATION DEVICE

PROCESSOR — 152

MEMORY — 151

NETWORK
INTERFACE — 150

FIG. 18

## FIG. 19

## FIG. 20

# FIG. 21

```
              ┌─────────────┐
              │    START    │
              └──────┬──────┘
                     │
                     ▼
┌──────────────────────────────────────┐   S101
│      INPUT NUMBER OF VARIABLES N,     │
│  PARAMETERS c₀, w₀, z₀, AND rᵢ (i = 1,│
│           2, ... , N−2)              │
└──────────────────┬───────────────────┘
                   │
                   ▼
┌──────────────────────────────────────┐   S102
│      ASSIGN ISING VARIABLES TO NODES  │
└──────────────────┬───────────────────┘
                   │
                   ▼
┌──────────────────────────────────────┐   S103
│      OUTPUT RESULT TO OUTPUT DEVICE   │
└──────────────────┬───────────────────┘
                   │
                   ▼
              ┌─────────────┐
              │     END     │
              └─────────────┘
```

Step S101: INPUT NUMBER OF VARIABLES N, PARAMETERS $c_0$, $w_0$, $z_0$, AND $r_i$ (i = 1, 2, ... , N−2)

Step S102: ASSIGN ISING VARIABLES TO NODES

Step S103: OUTPUT RESULT TO OUTPUT DEVICE

## FIG. 22

START

S201
INPUT LIST OF ALLOCATIONS, COEFFICIENT OF VARIABLE OF ISING PROBLEM, AND STRENGTHS OF COUPLINGS BETWEEN QUANTUM BITS CORRESPONDING TO NODES IN CHAIN INTO INPUT/OUTPUT DEVICE

S202
NPUT/OUTPUT DEVICE DETERMINES QUANTUM BITS TO BE USED AND CALCULATE STRENGTHS OF COUPLINGS BETWEEN  QUANTUM BITS

S203
INPUT/OUTPUT DEVICE INPUTS QUANTUM BITS TO BE USED AND STRENGTHS OF COUPLINGS BETWEEN QUANTUM BITS INTO QUANTUM ANNEALING MACHINE.

S204
QUANTUM ANNEALING MACHINE REALIZES STRENGTHS OF COUPLINGS BETWEEN QUANTUM BITS, SPECIFIED BY INPUT, IN QUANTUM BITS SPECIFIED BY INPUT

S205
QUANTUM ANNEALING MACHINE PERFORMS QUANTUM ANNEALING

S206
QUANTUM ANNEALING MACHINE OUTPUTS LIST OF STATES OF QUANTUM BITS TO INPUT/OUTPUT DEVICE

S207
INPUT/OUTPUT DEVICE CONVERTS LIST OF STATES OF QUANTUM BITS INTO LIST OF VALUES OF VARIABLES OF ISING PROBLEM

S208
INPUT/OUTPUT DEVICE OUTPUTS LIST OF VALUES OF VARIABLES OF ISING PROBLEM

END

## FIG. 23

| NUMBER OF VARIABLES IN EQUATION(2) | 4 | 8 | 12 | 16 | 20 | 24 | 28 | 32 |
|---|---|---|---|---|---|---|---|---|
| NUMBER OF VARIABLES IN EQUATION(5) | 9 | 49 | 121 | 225 | 361 | 529 | 729 | 961 |
| NUMBER OF NODES USED IN PRESENT EXAMPLE EMBODIMENT | 15 | 77 | 187 | 345 | 551 | 805 | 1107 | 1457 |
| NUMBER OF NODES USED IN THE COMPARATIVE EXAMPLE | 10 | 64 | 168 | 325 | 563 | 843 | 1230 | 1590 |

## FIG. 24

| NUMBER OF VARIABLES IN COST FUNCTION OF EQUATION(5) | | 9 | 49 | 121 | 225 | 361 | 529 | 729 | 961 |
|---|---|---|---|---|---|---|---|---|---|
| STANDARD DEVIATION OF THE NUMBER OF NODES USED IN PRESENT EXAMPLE EMBODIMENT | s | 0 | 0 | 0 | 0 | 0 | 0 | 0 | 0 |
| | t | 0 | 0 | 0 | 0 | 0 | 0 | 0 | 0 |
| STANDARD DEVIATION OF THE NUMBER OF NODES USED IN COMPARATIVE EXAMPLE | s | 0.40 | 0.54 | 0.69 | 0.89 | 1.04 | 1.08 | 1.12 | 1.14 |
| | t | 0.01 | 0.17 | 0.24 | 0.28 | 0.28 | 0.25 | 0.26 | 0.24 |

## FIG. 25

800

ALLOCATION DEVICE

801

ALLOCATION MEANS

802

OUTPUT MEANS

## INTERNATIONAL SEARCH REPORT

| International application No. |
| --- |
| **PCT/JP2023/004773** |

| A. | CLASSIFICATION OF SUBJECT MATTER |
| --- | --- |

*G06N 10/60*(2022.01)i; *G06N 99/00*(2019.01)i
FI:    G06N10/60; G06N99/00 180

According to International Patent Classification (IPC) or to both national classification and IPC

| B. | FIELDS SEARCHED |
| --- | --- |

Minimum documentation searched (classification system followed by classification symbols)

G06N10/60; G06N99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2022/239059 A1 (NEC CORPORATION) 17 November 2022 (2022-11-17) | 1-2, 11-13 |
|   | paragraphs [0008]-[0010], claims 1-2, 8-10, paragraphs [0099], [0100] | |
| A | | 3-10 |
| Y | DINNEEN, Michael J. et al. Efficient Clique Embedding with Faulty Hardware Components, CDMTCS Research Report CDMTCS-567 [online], 24 January 2023, pp. 1-18, [retrieved on 11 April 2023], Internet:<URL: https://hdl.handle.net/2292/62561>, ISSN 1178-3540 chapters 2, 2.3, 4.1 | 1-2, 11-13 |
| A | | 3-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 April 2023** | **25 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/004773**

| Patent document cited in search report | Publication date (day/month/year) | Patent family member(s) | Publication date (day/month/year) |
|---|---|---|---|
| WO 2022/239059 A1 | 17 November 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6656273 B

**Non-patent literature cited in the description**

- **K. BOOTHBY et al.** Zephyr Topology of D-Wave Quantum Processors. D-wave Systems inc., 26 October 2022
- **J. CAI et al.** A practical heuristic for finding graph minors. *arXiv:1406.2741*, 2014
- **A. ROCCHETTO et al.** Stabilizers as a design tool for new forms of the Lechner-Hauke-Zoller annealer. *Science Advances*, 2016, vol. 2, e1601246